(19) Europäisches Patentamt
European Patent Office
Office européen des brevets

(11) **EP 2 814 704 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.11.2019   Patentblatt 2019/45**

(45) Hinweis auf die Patenterteilung:
**20.07.2016   Patentblatt 2016/29**

(21) Anmeldenummer: 13704350.1

(22) Anmeldetag: **01.02.2013**

(51) Int Cl.:
*B60T 7/22* (2006.01)          *B60W 40/10* (2012.01)
*G08G 1/16* (2006.01)          *B60R 21/013* (2006.01)

(86) Internationale Anmeldenummer:
**PCT/EP2013/000305**

(87) Internationale Veröffentlichungsnummer:
**WO 2013/064705 (10.05.2013 Gazette 2013/19)**

(54) **VERFAHREN ZUR ERMITTLUNG EINER NOTBREMSSITUATION EINES FAHRZEUGES**

METHOD FOR DETERMINING AN EMERGENCY BRAKING SITUATION OF A VEHICLE

PROCÉDÉ POUR DÉTERMINER UNE SITUATION DE FREINAGE D'URGENCE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2012   DE 102012002695**

(43) Veröffentlichungstag der Anmeldung:
**24.12.2014   Patentblatt 2014/52**

(73) Patentinhaber: WABCO GmbH
**30453 Hannover (DE)**

(72) Erfinder:
 • **BREUER, Karsten**
   **88179 Oberreute (DE)**
 • **SANDKÜHLER, Dirk**
   **59505 Bad Sassendorf (DE)**

(74) Vertreter: **Bremer, Ulrich**
**Advopat**
**Postfach 1026**
**30010 Hannover (DE)**

(56) Entgegenhaltungen:
**EP-A1- 1 539 523          EP-A1- 1 625 979**
**EP-A1- 1 803 109          EP-A2- 0 891 903**
**EP-B1- 1 803 109          WO-A1-2009/072965**
**WO-A1-2009/072965          DE-A1- 10 258 617**
**DE-A1-102006 019 848          DE-A1-102007 060 862**
**DE-A1-102010 027 449          DE-A1-102010 051 203**
**DE-A1-102010 051 203          DE-A1-102011 009 665**
**DE-B3-102008 045 181          JP-A- 2004 039 245**
**US-A- 5 983 161          US-A1- 2003 191 568**
**US-A1- 2006 195 231          US-A1- 2008 275 618**
**US-A1- 2008 275 618          US-A1- 2009 143 951**
**US-A1- 2011 106 381          US-A1- 2011 190 972**
**US-A1- 2012 016 573          US-A1- 2012 016 573**

**Beschreibung**

Die Erfindung betrifft ein Verfahren zur Ermittlung einer Notbremssituation eines Fahrzeuges, eine Steuereinrichtung zur Durchführung eines derartigen Verfahrens sowie ein Fahrdynamik-Regelsystem mit einer derartigen Steuereinrichtung.

Die Erfindung betrifft insbesondere ein Verfahren zur Bewertung der Gefahr eines Heckaufpralls beim Fahren auf einer Straße, auf der sich ein vorausfahrendes Objekt, insbesondere ein Fahrzeug, befindet.

Hierzu ist es grundsätzlich bekannt, Bewegungsgleichungen aufzustellen, um eine Kollisionszeit bei dem derzeitigem Fahrverhalten des eigenen Fahrzeuges und des vorherigen Fahrzeuges zu ermitteln. Weiterhin ist es grundsätzlich auch bekannt, Sollverzögerungen zu ermitteln, um mögliche Kollisionen zu vermeiden.

Die EP 1 539 523 B1 bzw. DE10258617B4 beschreibt ein Verfahren und eine Vorrichtung zur Auslösung eines selbsttätigen Notbremsvorgangs eines Fahrzeuges. Hierbei werden die eigene Geschwindigkeit und die eigene Beschleunigung des Fahrzeuges ermittelt und ein Minimalabstand als Zielsicherheitsabstand angesetzt. Weiterhin wird eine Zielrelativgeschwindigkeit zwischen den beiden Fahrzeugen angesetzt, die mit Beendigung des selbsttätigen Notbremsvorgangs erreicht werden soll. Ergänzend wird die ermittelte aktuell vorliegende Relativbeschleunigung zwischen den beiden Fahrzeugen herangezogen.

Die DE 10 2006 019 848 B4 beschreibt eine Vorrichtung zum Reduzieren der Auswirkungen eines Fahrzeugzusammenstoßes, bei dem ein Hindernis mit seinem relativen Abstand und seiner relativen Geschwindigkeit detektiert und ein möglicher Zusammenstoß bzw. Unfall beurteilt wird, woraufhin gegebenenfalls ein Insassenschutzmittel aktiviert werden kann. Derartige Systeme sind auch als Pre-Crash-Systeme bekannt.

Die JP 2004038245 A1 zeigt einen Hindernisdetektor für Fahrzeuge, bei dem ergänzend eine detektierte Lenkradbetätigung herangezogen wird. Die EP 0 891 903 B1 beschreibt eine automatische Notbremsfunktion, bei der auch die Möglichkeit eines Umgehens des Hindernisses beurteilt wird. Die EP 1 625 979 B1 beschreibt ein Verfahren und eine Vorrichtung zur Auslösung einer Notbremsung, bei denen eine Kollisionswahrscheinlichkeit und weiterhin eine Gefährdung des eigenen Fahrzeuges im Falle einer Notbremsauslösung ermittelt werden und die Auslöseschwelle für die Notbremsung in Abhängigkeit dieser ermittelten Gefährdung veränderbar ist. Die EP 1 803 109 B1 beschreibt ein Verfahren zur Bestimmung relevanter Objekte im Nahbereich eines Fahrzeuges, bei dem kollisionsrelevante Werte aus Fahrzeug- und/oder Umgebungssensordaten unter Einbeziehung möglicher Ausweichmanöver oder Abbremsvorgänge berechnet werden.

Nachteilhaft an derartigen herkömmlichen Verfahren ist im Allgemeinen, dass sie oftmals nur auf spezielle Fahrsituationen beschränkt sind und damit nicht immer rechtzeitig zur Unfallvermeidung einer autonomen Bremsung beitragen. Weiterhin kann die Auslösung einer Notbremsung gegebenenfalls auch zu früh und damit gegebenenfalls unnötig erfolgen.

Weiterhin sind verschiedene Abstandshaltesysteme ohne Notbremsung bekannt. Das Bendix-Wingman ACB-Adaptive Cruise System mit Bremseigenschaft umfasst ein Abstandshalteverfahren, um den Abstand zu einem vorausfahrenden Fahrzeug konstant zu halten. Hierbei können Warn-Anzeigesignale und auch Notbremssignale zur selbsttätigen Durchführung eines Notbremsverfahrens ausgegeben werden. Hierzu wird der Abstand zu dem vorausgehenden Fahrzeug z.B. mit Radar gemessen.

Die nicht vorveröffentlichte DE102010051203A1 betrifft ein Verfahren zur Erkennung von kritischen Fahrsituationen von Kraftwagen, insbesondere zur Vermeidung von Kollisionen mit einem vor einem eigenen Fahrzeug befindlichen Objekt.

DieEP1803109B1 betrifft eine Vorrichtung und ein Verfahren zur Bestimmung relevanter Objekte im Nahbereich eines Kraftfahrzeugs mit einem Umgebungserfassungssensor, wobei aus den Daten des Umgebungserfassungssensors Abstand und Relativgeschwindigkeit zu einem Objekt und aus den Daten weiterer Fahrzeugsensoren der aktuelle Bewegungszustand des Fahrzeugs, insbesondere die Fahrzeuggeschwindigkeit und den Lenkwinkel, berechnet wird. Es werden nur Objekte als relevant klassifiziert, mit denen trotz einer durchschnittlichen Fahrerreaktion wie eines Ausweichmanövers und/oder eines Bremsvorgangs eine Kollision mit grosser Wahrscheinlichkeit eintritt, wobei zumindest zwei kollisionsrelevante Werte aus den Fahrzeug- und/oder Umgebungssensordaten berechnet werden, wobei ein erster kollisionsrelevanter Wert ein zukünftiges oder ein bereits eingeleitetes Ausweichmanöver und ein zweiter kollisionsrelevanter Wert einen Abbremsvorgang zur Kollisionsvermeidung beschreibt, und jeder der kollisionsrelevanten Werte durch einen oberen oder unteren Schwellwert begrenzt ist, der den Beginn eines kritischen Bereichs anzeigt, und die zugehörigen Schwellwerte nur aus den Fahrzeugsensordaten bestimmt werden, und eine Aktivierung der Bremsmittel eingeleitet wird, wenn sich zumindest einer der kollisionsrelevanten Werte im kritischen Bereich bewegt.

Die WO2009/072965A1 betrifft ein Verfahren, eine Vorrichtung und ein Computerprogrammprodukt zum Unterstützen einer Regelstrategie für den Antrieb eines Fahrzeugs und auf ein Kraftfahrzeug mit einer solchen Vorrichtung.

Die US2008275618A1 betrifft ein Fahrerassistenz- oder Kollisionsvermeidungssystem zur Verwendung in einem Fahrzeug, welches einem vorherfahrenden Fahrzeug folgt.

Die US2012016573A1 betrifft ein Steuersystem für ein Kraftfahrzeug, wobei das Steuersystem bestimmt, ob das Kraftfahrzeug nach ermittelten Informationen zu einem vorausfahrenden Fahrzeug zu stoppen ist.

Der Erfindung liegt die Aufgabe zugrunde, ein Verfahren, eine entsprechende Steuereinrichtung zu dessen Durchführung und ein Fahrdynamik-Regelsystem zu schaffen, die eine sichere Erkennung einer Notbremssituation ermöglichen und die Wahrscheinlichkeit einer unberechtigten Notbremsung gering halten.

Diese Aufgabe wird durch ein Verfahren nach Anspruch 1 und eine Steuereinrichtung nach Anspruch 14 gelöst. Die Unteransprüche beschreiben bevorzugte Weiterbildungen. Hierbei ist ergänzend ein Fahrdynamik-Regelsystem mit einer derartigen Steuereinrichtung oder zur Durchführung des Verfahrens vorgesehen.

Erfindungsgemäß werden somit unterschiedliche Bewertungsverfahren herangezogen, um in Abhängigkeit der jeweils aktuell vorliegenden Fahrsituation ein geeignetes Bewertungsverfahren heranzuziehen.

Gemäß einem ersten Bewertungsverfahren, das ein Bewegungsgleichungs-Bewertungsverfahren darstellt, werden Bewegungsgleichungen von sowohl dem eigenen Fahrzeug als auch dem sich vor dem Fahrzeug befindenden Objekt aufgestellt und in Abhängigkeit hiervon bewertet, ob eine Notbremssituation vorliegt. In Abhängigkeit dieser Bewertung kann nachfolgend insbesondere eine Bedarfsverzögerung errechnet werden. Die Bewegungsgleichungen können insbesondere in zweiter Ordnung der Zeit aufgestellt werden, also mit Anfangswert, linearem Term und quadratischem Term, so dass ein gemeinsames Gleichungssystem bzw. eine gemeinsame Bewegungsgleichung des eigenen Fahrzeuges und vorderen Objektes gebildet werden kann, aus der ein nachfolgendes Unterschreiten eines Minimalabstandes und/oder eine Kollision ermittelt werden kann.

Gemäß einem zweiten Bewertungsverfahren wird hingegen eine Bremswegbetrachtung durchgeführt, bei der der Bremsweg zumindest des eigenen Fahrzeuges ermittelt und bewertet werden kann.

Der Erfindung liegt der Gedanke zugrunde, dass in einer typischen Fahrsituation eines eigenen Fahrzeuges hinter einem vorausfahrenden vorderen Objekt eine Notbremssituation durch Bewegungsgleichungen des eigenen Fahrzeuges und des vorderen Objektes ermittelt werden kann. Für ein derartiges Bewegungsgleichungs-Bewertungsverfahren können insbesondere Bewegungsgleichungen zweiter Ordnung in der Zeit gebildet werden, d.h. mit einem Relativabstand als Term nullter Ordnung der Zeit, den Geschwindigkeiten (bzw. der Relativgeschwindigkeit) als Terme erster Ordnung in der Zeit und den Beschleunigungen als Terme zweiter Ordnung in der Zeit. Aus diesen Bewegungsgleichungen kann somit ein Gleichungssystem gebildet werden, mit dem ermittelt wird, ob nachfolgend eine Annäherung auf einen zulässigen Minimalabstand (z. B. ein Minimalabstand von 1 Meter oder auch Null) erfolgen wird. Hierbei können insbesondere ergänzend Reaktionszeiten der Bremssysteme des Fahrzeuges (z. B. zum Belüften der Bremsen) und/oder des Fahrers einbezogen werden, da sich Änderungen durch aktive Eingriffe erst nach der Reaktionszeit auswirken werden.

Erfindungsgemäß wird nunmehr erkannt, dass ein derartiger Ansatz eines Gleichungssystems, insbesondere auch von Bewegungsgleichungen in zweiter Ordnung der Zeit, in einigen Situationen zu Fehleinschätzungen führen kann. Bewegungsgleichungen zweiter Ordnung in der Zeit mit negativer Beschleunigung, d.h. einer Abbremsung bzw. Verzögerung des eigenen Fahrzeuges oder des vorausfahrenden Objektes, beinhalten mathematisch auch eine auf einen vollständigen Stillstand des Fahrzeuges oder des Objektes nachfolgende, fiktive Rückwärtsfahrt. Derartige fiktive Rückwärtsfahrten sind jedoch physikalisch unsinnig, da eine Verzögerung eines Fahrzeuges durch Bremseingriff oder Motor-Retardereingriff (oder auch z. B. Luftreibung) zwar zu einer Abbremsung (negativen Beschleunigung) einer positiven Geschwindigkeit bis in den Stillstand führen kann, jedoch keine Beschleunigung eines stehenden Fahrzeuges nach hinten mehr hervorrufen wird. Bei Stillstand des Fahrzeuges fällt die physikalisch einwirkende Bremswirkung, d.h. die negative Beschleunigung, vielmehr auf Null ab, d.h. das Fahrzeug kommt zum Stillstand, beginnt jedoch keine Rückwärtsfahrt.

Somit können in dem mathematischen Gleichungssystem fiktive, jedoch unsinnige Kollisionen ermittelt werden, die während einer Rückwärtsfahrt auftreten, insbesondere bei einer fiktiven Rückwärtsfahrt des vorausfahrenden vorderen Objektes.

Daher wird erfindungsgemäß das Bewegungsgleichungs-Bewertungsverfahren nur dann herangezogen, wenn es als sinnvoll eingeschätzt wird. Vorteilhafterweise werden Kriterien zur Ermittlung unterschiedlicher Situationen verwendet, um das geeignete Bewertungsverfahren auszuwählen.

Falls ermittelt wird, dass das erste Bewertungsverfahren, d.h. das Bewegungsgleichungs-Bewertungsverfahren, nicht sinnvoll ist, wird erfindungsgemäß ein anderes Bewertungsverfahren eingesetzt, wobei mindestens ein als zweites Bewertungsverfahren, und zwar ein Bremsweg-Bewertungsverfahren mit einer Bremswegbetrachtung vorgesehen ist. Hierbei wird ohne Einbeziehung der genauen Bewegungsgleichungen des eigenen Fahrzeuges und des vorderen Objektes ein Bremsweg des eigenen Fahrzeuges ermittelt und bewertet. Vorzugsweise wird ein zeitabhängiges Zulässigkeitskriterium definiert, welches die Eigen-Abbremszeit des ersten, eigenen Fahrzeugs mit der Objekt-Abbremszeit des vorderen, zweiten Objektes vergleicht, was eine besonders einfache Ermittlung und Festlegung der Zulässigkeit des ersten oder zweiten Bewertungsverfahrens darstellt. Dabei lässt sich die Eigen-Abbremszeit vorab bis zur Erreichung des Minimalabstandes bei gleichzeitig vollständigem Abbau der Relativgeschwindigkeit des eigenen, ersten Fahrzeuges zum vorderen, zweiten Objekt ermitteln. Die Objekt-Abbremszeit ist die Zeit, welche das vordere, zweite Objekt bis zum Stillstand benötigt.

Erfindungsgemäß kann auch vorab ein vorgeschaltetes Kriterium eingesetzt werden, ob nicht bereits der Relativabstand nach der Reaktionszeit den Minimalabstand erreicht oder unterschreitet und somit bereits eine Notbremssituation vorliegt; dies kann als vorgeschaltetes ("nulltes") Bewertungsverfahren aufgefasst werden, so dass das erste und zweite Bewertungsverfahren erst gar nicht relevant werden.

Die eigene erste Beschleunigung kann durch einen Längsbeschleunigungssensor gemessen und/oder durch zeitliche Ableitung der eigenen, ersten Geschwindigkeit ermittelt werden. Der Relativabstand zum vorderen Objekt kann insbesondere durch einen Abstandssensor ermittelt werden. Hieraus kann somit zumindest aus dem zeitlichen Verhalten des Signals des Relativabstandes auch die zweite Geschwindigkeit des Objektes und als zeitliche Ableitung hiervon dessen zweite Beschleunigung ermittelt werden. Grundsätzlich kann die zweite Geschwindigkeit des Objektes jedoch auch z.B. durch eine Radardopplermessung erfasst werden. Die erfindungsgemäße Bewertung der Notbremssituation kann dann insbesondere durch Ermittlung der Bedarfsverzögerung des eigenen Fahrzeuges ermittelt werden.

In einem Weg-Zeit-Diagramm ergeben die Bewegungsgleichungen zweiter Ordnung der Zeit somit Parabeln; bei einer negativen Beschleunigung, d.h. Abbremsung bzw. Verzögerung, sind die Parabeln nach unten offen. Die entsprechenden Geschwindigkeitsverläufe bilden Geraden, bei einer Abbremsung somit mit negativer Steigung.

Die abfallenden Äste einer parabolischen Bewegungskurve im Weg-Zeit-Diagramm und entsprechend negative Werte im Geschwindigkeits-Zeitdiagramm werden erfindungsgemäß als physikalisch unsinnig bewertet; derartige Zustände, die zu einer falschen Bewertung führen, werden erfindungsgemäß mittels geeigneter Kriterien ausgeschlossen.

Somit kann der fiktive Fall ausgeschlossen werden, dass das vordere Fahrzeug bei einer negativen Beschleunigung, d.h. Verzögerung oder Bremsung, in einer nachfolgenden fiktiven Rückwärtsbewegung nach seinem Stillstand eine Kollision mit dem eigenen Fahrzeug auslöst.

Um diesen Fall der fiktiven, kollisionsbegründenden Rückwärtsfahrt auszuschließen, wird vorteilhafterweise überprüft, welche Zeiten oder welche Bremswege das Objekt und das eigene Fahrzeug bis zum Stillstand benötigen. Falls das eigene Fahrzeug früher oder gleichzeitig mit dem vorderen Objekt den Stillstand erreicht, kann gemäß einer bevorzugten Ausbildung vorteilhafterweise das erste Bewertungsverfahren angesetzt werden. Falls das eigene Fahrzeug jedoch später als das vordere Objekt den Stillstand erreicht, wird das Bewegungsgleichungs-Bewertungsverfahren vorteilhafterweise nicht angesetzt, da ein fiktiver Kollisionsfall bei nachfolgender Rückwärtsfahrt des vorderen Objektes ermittelt wird. Somit ergibt sich ein Zulässigkeitskriterium für das Bewegungsgleichungs-Bewertungsverfahren, wobei bei Nichterfüllung nachfolgend das zweite Bewertungsverfahren herangezogen wird.

Beim zweiten Bewertungsverfahren werden grundsätzlich die Bremswege, nicht jedoch die Dynamik der Fahrzeuge bis zu ihrem Stillstand, d.h. ihre genauen Bewegungsgleichungen herangezogen. Somit könnte zwar theoretisch der Fall auftreten, dass zwar bei den errechneten Werten zum Zeitpunkt des Stillstandes ein Sicherheitsabstand zwischen dem eigenen Fahrzeug und dem vorderen Objekt eingehalten wird, aufgrund der tatsächlichen Dynamik des eigenen Fahrzeuges jedoch bis dahin eine Kollision (oder Unterschreitung des Minimalabstandes) aufgetreten ist. Erfindungsgemäß wird jedoch erkannt, dass sich das erste und zweite Bewertungsverfahren ideal ergänzen. Derartige Kollisionen können bereits durch das Bewegungsgleichungs-Bewertungsverfahren erfasst werden. Falls somit das Zulässigkeitskriterium für das Bewegungsgleichungs-Bewertungsverfahren erfüllt ist und das Bewegungsgleichungs-Bewertungsverfahren herangezogen werden kann, werden Kollisionen bis zum Stillstand sicher erfasst. Falls das Bewegungsgleichungs-Bewertungsverfahren jedoch wegen Nichterfüllung des Zulässigkeitskriteriums nicht herangezogen werden kann, kann bei dem zweiten Bewertungsverfahren nachfolgend keine Falsch-Aussage mehr dahingehend auftreten, dass zwar zum Zeitpunkt des Stillstandes der Sicherheitsabstand bzw. Minimalabstand eingehalten wird, jedoch bis dahin eine Kollision auftritt. Derartige Kollisionen wären im Bewegungsgleichungs-Bewertungsverfahren erfasst worden.

Somit wird ein sicheres und mit relativ geringem Berechnungsaufwand durchführbares Verfahren geschaffen, das auch unterschiedliche Ausgangsbewegungszustände des eigenen Fahrzeuges und des vorderen Objektes sicher erfasst. Hierbei wird auch eine unnötig frühe Notbremsung mit hieraus entstehenden Gefährdungen sowohl des eigenen Fahrzeuges als auch gegebenenfalls dahinter fahrender Fahrzeuge mit hoher Sicherheit ausgeschlossen.

Erfindungsgemäß kann durch das Verfahren sowohl eine selbsttätige Notbremsung ausgelöst oder auch eine Warn-Anzeigesignal an den Fahrer ausgegeben werden. Bei der genauen Ermittlung können hierbei Reaktionszeiten einbezogen werden, die somit bei einem automatischen Notbremssystem die apparativ bedingten Zeiten zum Befüllen der Bremsen und Betätigen der Aktuatoren umfassen und bei Ausgabe eines Warn-Anzeigesignals an den Fahrer ergänzend auch die Reaktionszeit des Fahrers berücksichtigen.

Gemäß einer besonders bevorzugten Ausführungsform werden verschiedene Fälle hierarchisch untergliedert. Ein erster Fall kann zunächst grundsätzlich überprüfen, ob der Relativabstand zwischen dem eigenen Fahrzeug und dem vorderen Objekt nach der Reaktionszeit kleiner als ein einzuhaltender Minimalabstand ist; falls dieses erste Kriterium erfüllt ist, wird immer sofort eine Notbremsung eingeleitet. Erst nachfolgend werden dann z. B. vier Fälle betrachtet, bei denen jeweils ermittelt wird, ob das erste oder zweite Bewertungsverfahren anzusetzen ist. Bei diesen Fällen wird vorteilhafterweise die Beschleunigung des vorderen Objektes und die Relativgeschwindigkeit, insbesondere die Relativgeschwindigkeit nach der Reaktionszeit herangezogen. Somit kann eine Fallunterscheidung aufgrund lediglich dieser zwei Größen erfolgen, insbesondere in vier oder fünf verschiedenen Fällen.

Bei diesen Fällen kann dann gegebenenfalls zunächst das Bewegungsgleichungs-Bewertungsverfahren überprüft und falls dies nicht zutrifft dann das zweite Bewertungsverfahren herangezogen werden. Bei zwei weiteren Fällen kann z.B. lediglich das Bewegungsgleichungs-Bewertungsverfahren oder das zweite Bewertungsverfahren herangezogen werden. Weiterhin kann ein Fall vorliegen, bei dem die Beschleunigung des vorderen Objektes positiv und auch die Differenz- bzw. Relativgeschwindigkeit positiv ist, so dass erkannt werden kann, dass insgesamt keine Kollisionsgefahr vorliegt.

Die erfindungsgemäße Steuereinrichtung kann insbesondere in Abhängigkeit des Ergebnisses des erfindungsgemäßen Verfahrens das Motormoment kappen, wozu sie z. B. Steuersignale an ein Motorsteuergerät ausgibt.

Die Erfindung wird im Folgenden anhand der beiliegenden Zeichnungen an einigen Ausführungsformen erläutert. Es zeigen:

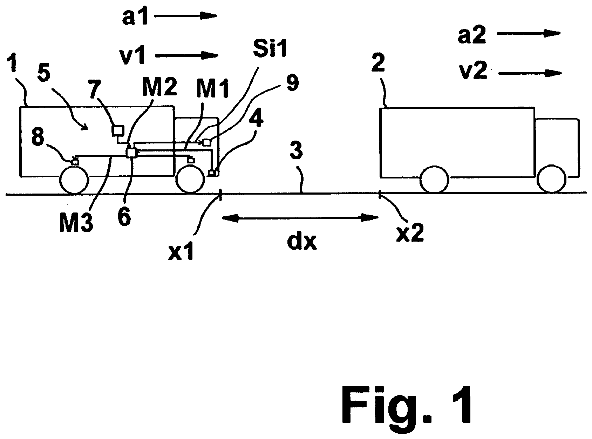

Fig. 1            die Darstellung einer Straßenszene mit zwei hintereinander fahrenden Fahrzeugen;

Fig. 2 bis 7    Diagramme der Wegstrecken und Geschwindigkeiten der beiden Fahrzeuge sowie ihres Relativabstandes gemäß unterschiedlichen Anfangsbedingungen.

Ein erstes, eigenes Fahrzeug 1 fährt hinter einem vorderen Objekt 2, hier einem zweiten, vorderen Fahrzeug 2, auf einer Fahrbahn 3. Im Folgenden werden lediglich Bewegungen in der gemeinsamen FahrzeugLängsrichtung betrachtet. Das erste, eigene Fahrzeug 1 befindet sich auf einer Position x1 und fährt mit einer Geschwindigkeit v1 sowie einer Beschleunigung a1. Ein Abbremsvorgang stellt somit eine Beschleunigung a1 mit negativem Wert dar. Entsprechend befindet sich das zweite, vordere Fahrzeug 2 auf einer Position x2, fährt mit einer zweiten Geschwindigkeit v2 und einer zweiten Beschleunigung a2. Sämtliche Größen x1, v1, a1; x2, v2, a2 sind zeitabhängig. Es werden nachfolgend Bewegungsgleichungen zweiter Ordnung der Zeit für die beiden Fahrzeuge, das erste, eigene Fahrzeug 1 und das vordere Fahrzeug 2, aufgestellt. Hierbei wird vorzugsweise eine konstante erste, eigene und zweite Beschleunigung a1, a2 angenommen, zumindest bis zur Einleitung eines Bremsvorgangs des eigenen Fahrzeuges 1.

Das eigene Fahrzeug 1 weist einen Abstandssensor 4 zur Ermittlung eines Relativabstandes dx zwischen dem ersten, eigenen Fahrzeug 1 und dem vorderen Fahrzeug 2, ein Fahrdynamiksystem 5 mit einer Steuereinrichtung 6, einen Geschwindigkeitssensor 7 und von der Steuereinrichtung 6 ansteuerbare Fahrzeugbremsen 8 auf. Der Abstandssensor 4 gibt ein Relativabstands-Messsignal M1, entsprechend der Geschwindigkeitssensor 7 ein Geschwindigkeits-Messsignal M2 an die Steuereinrichtung 6. Hierbei kann der Geschwindigkeitssensor 7 auch durch die ABS- Raddrehzahlsensoren gebildet werden. Weiterhin gibt die Steuereinrichtung 6 Brems-Steuersignale M3 an die Fahrzeugbremsen 8 aus.

Erfindungsgemäß wird in Abhängigkeit verschiedener Kriterien eine Fallunterscheidung in verschiedenen Szenarien vorgenommen, in denen dann unterschiedliche Bewertungsverfahren bzw. Bewertungsmethoden angewendet werden zur Ermittlung, ob eine Kollision auftreten kann und wann ggf. eine Notbremsung einzuleiten ist.

Sämtliche Berechnungen erfolgen in dem hinteren ersten, eigenen Fahrzeug 1, das somit die Gefahr einer Auffahr-Kollision (Heck-Kollision, rear-end collision) mit dem vorderen Fahrzeug 2 ermittelt. In Abhängigkeit der Ermittlung kann nachfolgend entweder selbsttätig eine Notbremsung durch ein autonomes Notbremssystem (advanced emergency braking system, AEBS) des ersten, eigenen Fahrzeuges 1 eingeleitet und/oder ein Warn-Anzeigesignal Si1 über eine Warn-Anzeige 9 an den Fahrer des ersten, eigenen Fahrzeuges 1 ausgegeben werden.

Für diese beiden Fälle kann jeweils eine unterschiedliche Reaktionszeit t1 angesetzt werden. Bei einem selbsttätigen AEBS ist eine kürzere Reaktionszeit t1 anzusetzen, die im Wesentlichen bestimmt wird durch die Zeit zum Aufbauen eines Bremsdrucks in den Bremsen (Bremsbelüftung). Bei einer Kollisions-Warnung (forward collision warning, FCW) an den Fahrer ist zunächst die Reaktionszeit des Fahrers, z. B. zwischen einer Sekunde bei einem aufmerksamen Fahrer und zwei Sekunden bei einem abgelenkten oder unaufmerksamen Fahrer, und ergänzend die apparativ erforderliche Zeit zum Aufbau des internen Bremsdrucks zu berücksichtigen.

Nachfolgend werden Bewertungsverfahren für das Bremskriterium, d. h. die Ermittlung eines Zeitpunkts, bei dem die Notbremsung einzuleiten ist, beschrieben.

Grundgedanke hierbei ist, nach Möglichkeit die Bewegungsgleichungen zweiter Ordnung des ersten, eigenen Fahrzeuges 1 und des zweiten, vorderen Fahrzeuges 2 aufzustellen und hieraus zu ermitteln, ob eine Notbremsung einzuleiten ist. Somit wird eine Bewegungsbahn bzw. Bewegungsparabel aufgestellt, die bei negativer Beschleunigung ggf. bis zum Stillstand führen kann, mathematisch jedoch auch in den darauf folgenden Zeitwerten eine Rückwärtsfahrt des betreffenden ersten eigenen Fahrzeuges 1 und/oder des betreffenden zweiten vorderen Fahrzeuges 2 beschreibt. Da die negative Beschleunigung durch die Bremswirkung jedoch beim Stillstand des ersten eigenen Fahrzeuges 1 und des zweiten vorderen Fahrzeuges 2 aufhört und nicht zu einer Rückwärtsfahrt bzw. weitergehenden Beschleunigung in Rückwärtsrichtung (negative Richtung) führt, wird erfindungsgemäß unterschieden, ob bei Aufstellung der Bewegungsparabeln bzw. Bewegungsgleichung zweiter Ordnung dieser physikalisch unsinnige Fall mit einer ggf. fälschlicherweise eine Kollision (bzw. Unterschreiten des Minimalabstande) indizierenden Situation bei nachfolgender fiktiver Rückwärtsfahrt erfasst wird. Falls dieser Fall ausgeschlossen werden kann, werden die Bewegungsgleichungen zweiter Ordnung in der Zeit aufgestellt. Falls jedoch auf einen derartigen oder entsprechenden Fall erkannt wird, wird erfindungsgemäß eine Bremsweg-Betrachtung durchgeführt.

1. Bewertungsverfahren BV1:

Ermittlung des Bremskriteriums aus den Bewegungsgleichungen zweiter Ordnung.
Die Position des zweiten, vorderen Fahrzeuges 2 (Objektes) ist darzustellen als

$$x2 = x2\_0 + v2 \cdot t + \frac{1}{2} a2 \cdot t^2. \qquad \text{Gleichung 1}$$

mit x2_0 der Position zum Zeitpunkt t=0.
Entsprechend stellt sich die Position des eigenen, ersten Fahrzeuges 1 wie folgt dar:

$$x1 = x1\_0 + v1 \cdot t + \frac{1}{2} a1 \cdot t^2. \qquad \text{Gleichung 2}$$

Hierbei bezieht sich x1 auf den vorderen Endpunkt des eigenen, ersten Fahrzeuges 1; hingegen bezieht sich x2 auf den hinteren Endpunkt, d. h. das Heck des vorderen, zweiten Fahrzeuges 2, so dass der Relativabstand dx direkt von dem Abstandsensor 4 gemessen wird. Bei dx = 0 liegt somit eine Kollision bzw. ein Auffahrunfall vor.
Der Relativabstand dx lässt sich aus Gleichung 1 und 2 darstellen als

$$dx = (x2\_0 - x1\_0) + (v2 - v1) \cdot t + \frac{1}{2} \cdot (a2 - a1) \cdot t^2.$$

Daraus folgt:

$$dx = dx\_0 + dv \cdot t + \frac{1}{2} \cdot (a2 - a1) \cdot t^2, \qquad \text{Gleichung 3}$$

mit dv = v2 - v1, d. h. der Relativgeschwindigkeit und dx_0=x2_0-x1_0, einem zum Zeitpunkt t=0 ermittelten Relativabstand dx_0.
Diese Gleichung beschreibt somit die relative Bewegung zwischen dem ersten, eigenen Fahrzeug 1 und dem zweiten, vorderen Fahrzeug 2. Um eine Kollision zwischen dem ersten eigenen Fahrzeug 1 und dem zweiten vorderen Fahrzeug 2 so spät wie möglich noch zu vermeiden, wird erfindungsgemäß angesetzt:
Es wird nunmehr die (vom Betrag her negative) Beschleunigung a1 des eigenen Fahrzeuges 1 ermittelt, um die Relativgeschwindigkeit dv auf Null zu bringen, wenn zugleich ein zulässiger Minimalabstand dx_min erreicht wird, d.h. dx = dx_min. Der Gedanke hierbei ist, dass bei einer Relativgeschwindigkeit dv= 0 keine Annäherung des ersten eigenen Fahrzeuges 1 an das zweite vordere Fahrzeug 2 mehr erfolgt, was bei Erreichen des Minimalabstandes dx_min erfolgt sein soll.
Werden somit diese beiden Bedingungen dv = 0 und dx = dx_min in Gleichung 3 eingesetzt, ergibt sich als erste Soll-Beschleunigung a1_d_1 folgender Wert

$$a1\_d\_1 = a2 - \frac{dv^2}{2 \cdot (dx\_0 - dx\_\min)} \qquad \text{Gleichung 4.}$$

Hierbei wird der Wert a1_d_1 als "erste" Soll-Beschleunigung bezeichnet und mit dem Zusatz "_1" versehen, da sie nach dem ersten Bewertungsverfahren BV1, d.h. dem Bewegungsgleichungs-Bewertungsverfahren, ermittelt wird.
Um die erforderliche erste Soll-Beschleunigung a1_d_1 des eigenen Fahrzeuges 1 zu berechnen, wird als dv_t1 die Relativgeschwindigkeit nach der Reaktionszeit t1 bestimmt. Hierbei wird in den obigen Gleichungen somit angenommen, dass zwischen dem Zeitpunkt t=0 und t=t1 die Beschleunigungen a1 und a2 konstant sind. Es ergibt sich somit

$$dv\_t1 = dv + (a2 - a1) \cdot t1 \qquad\qquad \text{Gleichung 5.}$$

Zudem wird zur Ermittlung der ersten Soll-Beschleunigung a1_d_1 der Relativabstand dx_t1 nach der Reaktionszeit t1 ermittelt. Dazu wird wiederum angenommen, dass die Beschleunigungen a1 und a2 konstant sind. Mit dem zum Zeitpunkt t = 0 von dem Abstandssensor 4 ermittelten Relativabstand dx bzw. dx_0 lässt sich dx_t1 damit wie folgt berechnen.

$$dx\_t1 = dx\_0 + dv \cdot t1 + (a2 - a1) \cdot \frac{t1^2}{2} \qquad\qquad \text{Gleichung 6.}$$

Somit lässt sich auf Grundlage von dv_t1 und dx_t1 die erforderliche erste Soll-Beschleunigung a1_d_1 des eigenen Fahrzeuges 1 wie folgt berechnen:

$$a1\_d\_1 = a2 - \frac{(dv\_t1)^2}{2 \cdot (dx\_t1 - dx\_min)} \qquad\qquad \text{Gleichung 7.}$$

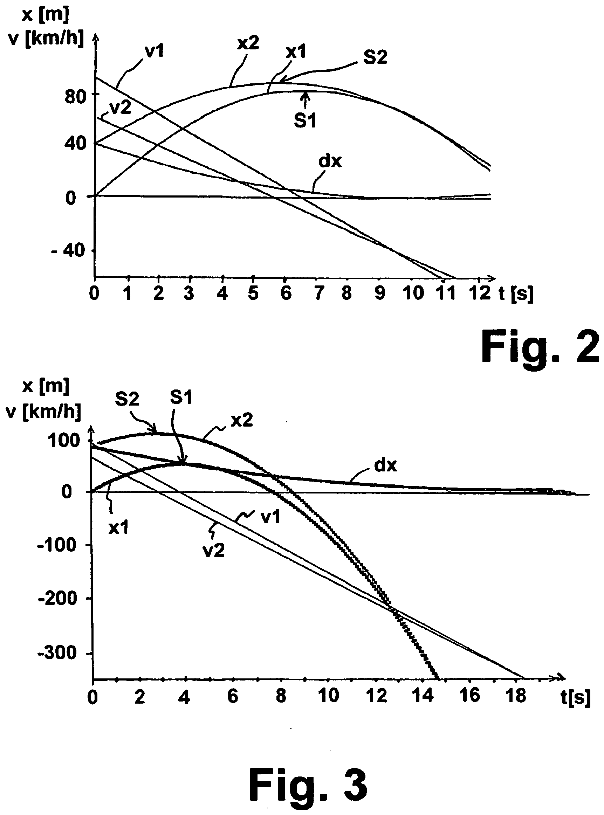

Diese Gleichung 7 wird zur Berechnung der erforderlichen ersten Soll-Beschleunigung a1_d_1 in dem folgenden Beispiel herangezogen. In diesem Beispiel beschleunigt das vorausfahrende, zweite vordere Fahrzeug 2 mit einer zweiten Beschleunigung a2 = -3 m/s$^2$, d. h. das vordere, zweite Fahrzeug 2 bremst von einer zweiten Anfangsgeschwindigkeit v2 = 60 km/h ab. Das eigene, erste Fahrzeug 1 hat eine anfängliche Geschwindigkeit von v1 = 90 km/h. Der Minimalabstand dx_min wird auf 1 m gesetzt, der Relativabstand dx_t0 zum Zeitpunkt t=0 zwischen dem ersten eigenen Fahrzeug 1 und dem zweiten vorderen Fahrzeug 2 wird durch den Abstandssensor 4 auf dx_0 = 60 m ermittelt. Mit einer Reaktionszeit t1=1s s führt dieses Beispiel mittels Gleichung 7 zu einer erforderlichen ersten Soll-Beschleunigung von a1_d_1= -4,3 m/s$^2$. Die hieraus folgenden Bewegungskurven des ersten eigenen Fahrzeuges 1 und des zweiten vorderen Fahrzeuges 2 sind in Fig. 2 gezeigt.

Die Geschwindigkeitskurven von der ersten Geschwindigkeit v1 und der zweiten Geschwindigkeit v2 fallen somit linear ab und erreichen die Null-Linie. Die Wegkurven x1 und x2 bilden nach unten offene Parabeln, die zunächst ansteigen bis zu ihrem jeweiligen Scheitelpunkt S1 bzw. S2, bei dem somit auch v1 bzw. v2 gleich 0 werden; die rechte Seite der Parabeln wird erfindungsgemäß als physikalisch unsinnig bewertet, da sie jeweils einer fiktiven Rückwärtsbewegung entspricht.

Bei dem gewählten Beispiel wird nach t = 5,5 s ein Stillstand des zweiten vorderen Fahrzeuges 2 erreicht, d. h. v2 (t = 5,5 s) = 0. Das eigene Fahrzeug 1 erreicht den Stillstand v1 = 0 bei t = 6,8 s.

Bei diesem Beispiel beginnt somit ab t = 5,5 s, d. h. der fiktiven Rückwärtsbewegung des zweiten vorderen Fahrzeuges 2, der unzulässige Bereich in diesem Diagramm.

In diesem Beispiel der Fig. 2 ist der Punkt, bei dem die Bedingungen dv = 0 und dx = dx_min erfüllt sind, bei t = 9,7 s angeordnet, wenn sich die beiden Geraden von v1 und v2 schneiden. Dieser fiktive Schnittpunkt liegt jedoch bereits im unzulässigen Bereich, wobei sogar beide Fahrzeuggeschwindigkeiten negativ sind mit v1 = v2 = -44,8 km/h, d. h. jeweils einer fiktiven Rückwärtsbewegung. Das Ergebnis wird somit erfindungsgemäß als unzulässig bewertet.

Ein Vergleich der Scheitelpunkte S1 und S2, d. h. der Positionen x1 (v1 = 0) = 94,8m und x2 (v2 = 0) = 107,1 m zeigt jedoch, dass mit diesem Ergebnis für a1_d_1 in dieser Situation eine Kollision vermieden worden wäre. Der Relativabstand dx zwischen den beiden Fahrzeugen 1 und 2 zum Zeitpunkt des Stillstandes liegt mit 107,1 m - 94,8 m = 12,3 m höher als der vorausgesetzte Minimalwert dx_min, woraus folgt, dass die Abbremsung bzw. Beschleunigung mit a1_d_1 zu stark war, d. h. eine zu hohe Bremswirkung darstellt. Somit würde ein autonomes Bremssystem zu früh aktiviert werden.

Die Schwäche dieses ersten Verfahrens bzw. ersten Ansatzes zeigt sich insbesondere in Situationen, in denen z. B. anfangs, d.h. bei t=0, ein großer Relativabstand dx zwischen dem ersten, eigenen Fahrzeug 1 und dem zweiten, vorderen Fahrzeug 2 und eine hohe Abbremsung des vorderen Fahrzeuges 2 vorliegen; in derartigen Situationen kommt es somit schneller zu der fiktiven Rückwärtsbewegung des vorderen Fahrzeuges 2 mit nachfolgender fiktiver Kollision bei Rückwärtsbewegung des vorderen Fahrzeuges 2. In Fig. 3 wird eine gegenüber Fig. 2 abgewandelte Situation gezeigt; gegenüber Fig. 2 sind die Geschwindigkeiten v2 = 60 km/h, v1 = 90 km/h zum Zeitpunkt t=0 und der Minimalabstand dx_min = 1 m konstant gehalten. Nunmehr beschleunigt das vordere Fahrzeug 2 jedoch mit a2 = -6 m/s$^2$, d. h. hoher Abbremsung, und der anfängliche Relativabstand dx_0 zwischen Fahrzeug 1 und 2 beträgt dx_0 = 90 m. In diesem Fall führt Gleichung 7 zu einer ersten Soll-Beschleunigung a1_d_1 von -7,3 m/s$^2$. Die Bewegungskurven sind in Fig. 3 gezeigt.

Bei diesem Beispiel der Fig. 3 zeigt ein Vergleich der Positionen der Fahrzeuge an ihren Scheitelpunkten S1 und S2, d. h. x1 (v1 = 0) = 68,9 m und x2 (v2 = 0) = 114 m, dass der Relativabstand dx beim Stillstand zwischen ihnen 45,1 m beträgt. Der Punkt, an dem die Bedingungen dv = 0 und dx = dx_min erfüllt sind, liegt wiederum im unzulässigen Bereich, nachdem das zweite vordere Fahrzeug 2 zum Stillstand gekommen ist, d. h. bei t = 11,8 s, v2 = -195 km/h, ähnlich wie beim obigen Beispiel der Fig. 2.

Erfindungsgemäß wird somit dieser Ansatz über Bewegungsgleichungen zweiten Grades der Zeit mit den Randbedingungen, durch die Abbremsung eine Relativgeschwindigkeit dv=0 (gleiche Geschwindigkeit der Fahrzeuge) zu erreichen bei gleichzeitiger Einstellung eines Minimalabstandes dx_min, für derartige Fälle nicht herangezogen bzw. verworfen.

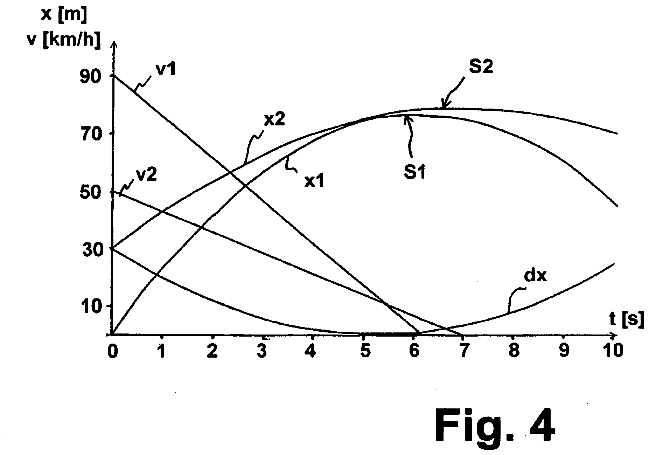

In Figur 4 ist ein weiteres Beispiel gezeigt, bei dem die Bedingungen dv = 0 und dx = dx_min erreicht sind, bevor das vordere Fahrzeug 2 zum Stillstand kommt. Das vordere Fahrzeug 2 bremst mit a2 = -2 m/s² von einer anfänglichen zweiten Geschwindigkeit von v2=50 km/h ab. Das eigene Fahrzeug 1 hat eine anfängliche Geschwindigkeit von v1=90 km/h. Der Wert für dx_min wird auf 1 m gesetzt, und der anfängliche Relativabstand dx_0 zwischen den zwei Fahrzeugen 1,2 beträgt dx_0 = 40 m. Die Reaktionszeit liegt wieder bei t1 = 1 s. Für dieses Beispiel führt Gleichung 7 auf einen Wert a1_d_1 von -5,2 m/s². Die resultierenden Bewegungen sind in Figur 4 gezeigt. Das vordere Fahrzeug 2 kommt nach t = 7 sec. zum Stillstand. Die Bedingungen dv = 0 und dx = dx_min werden bei t = 5,1 s erfüllt. In dieser Situation stellt das Ergebnis einen Zeitpunkt dar, der im erlaubten Bereich liegt; die Gleichungen 3 und 4 stellen realistische Bewegungen beider Fahrzeuge 1,2 mit v1, v2 > 0 dar. Somit stellt der Wert a1_d_1, der auf Basis von Gleichung 7 berechnet wird, in dieser Situation der Figur 4 einen zulässigen Wert dar, der zur Bewertung der Situation herangezogen werden kann.

Somit kann erfindungsgemäß angesetzt werden, dass Gleichung 7 so lange zulässige Werte liefert, wie beide Fahrzeuge 1, 2 noch fahren, d. h. noch nicht den Stillstand erreicht haben. Hingegen werden die Ergebnisse unzulässig, wenn eines der Fahrzeuge 1,2 zum Stillstand kommt.

In der grafischen Darstellung der Figuren beginnt somit dann ein unzulässiger Bereich, wenn die paraboloide Weg-Kurve x1 oder x2 eines der Fahrzeuge 1, 2 ihren Scheitelpunkt S1 oder S2 erreicht; entsprechend schneiden die Geschwindigkeits-Geraden dann jeweils den Null-Punkt bzw. die Null-Achse.

Erfindungsgemäß wird daher ein Zulässigkeitskriterium Zk1 angesetzt, um die Zulässigkeit dieser ersten Bewertungsmethode zu überprüfen. Hierzu wird die Eigen-Abbremszeit t1_dv, die das eigene Fahrzeug 1 bis zu den Bedingungen dv = 0 und dx = dx_min benötigt, mit der Objekt-Abbremszeit t2_stop verglichen, die das zweite vordere Fahrzeug 2 für die Abbremsung bis zum Stillstand benötigt. Wenn das Zulässigkeitskriterium Zk1: t1_dv ≤ t2_stop erfüllt ist, ist sichergestellt, dass die Situation entsprechend Figur 4 zu bewerten ist, d. h. das eigene Fahrzeug 1 erreicht dv = 0 und dx = dx_min, bevor das vordere Fahrzeug 2 zum Stillstand kommt. Somit wird hierdurch ein zulässiges Ergebnis angezeigt, d.h. das Bewegungsgleichungs-Bewertungsverfahren (erstes Bewertungsverfahren) ist zulässig.

Die Objekt-Abbremszeit t2_stop wird auf Basis seiner aktuellen zweiten Geschwindigkeit v2 und zweiten Beschleunigung a2 berechnet:

$$t2\_stop = \frac{(0km/h - v2)}{a2} = -\frac{v2}{a2} \qquad \text{Gleichung 8}$$

Die vom eigenen Fahrzeug 1 benötigte Eigen-Abbremszeit t1_dv basiert auf dem Ergebnis für a1_d_1 von Gleichung 7 und kann berechnet werden als

$$t1\_dv = \sqrt{\frac{2(dx\_t1 - dx\_min)}{(a2 - a1\_d\_1)}} + t1 \qquad \text{Gleichung 9}$$

Somit ergeben sich folgende Bewertungskriterien für die Zulässigkeit bzw. Validität:
Wenn das Zulässigkeitskriterium Zk1 erfüllt ist, d.h. t1_dv ≤ t2_stop, dann ist die erste Soll-Beschleunigung a1_d_1 gültig bzw. zulässig, d.h. das Bewegungsgleichungs-Bewertungsverfahren (erstes Bewertungsverfahren) BV1 mit Gleichung 7 ist zulässig.

Wenn t1_dv > t2_stop, dann ist a1_d_1 nicht zulässig.

Um diese unzulässigen Situationen, bei denen die oben beschriebene Ermittlung nicht zu einem zulässigen Ergebnis führt, entsprechend erfassen zu können und eine zweite, in diesem Fall zulässige Soll-Beschleunigung bzw. Bedarfsverzögerung a1_d_2 zu ermitteln, wird das nachfolgende zweite Bewertungsverfahren BV2 bzw. Bewertungsmethode angesetzt:
Zweites Bewertungsverfahren BV2:
Das zweite Bewertungsverfahren BV2 berechnet den Abstand, den das eigene Fahrzeug 1 bis zum Stillstand hinter dem vorderen Fahrzeug 2 zur Verfügung hat.

Auf Grundlage dieses Abstandes wird die zweite Soll-Beschleunigung a1_d_2 berechnet, die bis zum Stillstand innerhalb dieses Abstandes erforderlich ist, ausgehend von der aktuellen Geschwindigkeit v1 des eigenen Fahrzeuges 1. Zu dieser Berechnung werden alle Teile, die hierzu beitragen, einbezogen. Diese Teile bzw. Teilstrecken sind:

- der derzeitige Abstand dx zwischen dem eigenen Fahrzeug 1 und dem vorderen Fahrzeug 2,
- der Abstand s2_stop, den das vordere Fahrzeug 2 während des Abbremsvorgangs mit seiner derzeitigen zweiten Beschleunigung a2 (Abbremsung) von seiner derzeitigen zweiten Geschwindigkeit v2 bis zum Stillstand zurücklegt,
- die Wegstrecke s1_react, die das eigene Fahrzeug 1 während der Reaktionszeit t1 zurücklegt,
- den Minimalabstand dx_min, der zwischen den Fahrzeugen 1 und 2 verbleiben soll, nach dem beide zum Stillstand gekommen sind.

Der für das eigene Fahrzeug 1 maximal verfügbare Bremsweg s1_br wird berechnet gemäß

$$s1\_br = dx + s2\_stop - s1\_react - dx\_\min \qquad \text{Gleichung 10,}$$

mit

$$s2\_stop = -\frac{v2^2}{2 \cdot a2} \qquad \text{Gleichung 11}$$

$$s1\_react = v1 \cdot t1 + \frac{1}{2} \cdot a1 \cdot t1^2 \qquad \text{Gleichung 12}$$

Um die erforderliche zweite Soll-Beschleunigung a1_d_2 des eigenen Fahrzeuges 1 zu berechnen, wird zunächst die Geschwindigkeit v1_t1 des eigenen Fahrzeuges 1 nach der Reaktionszeit t1 ermittelt. Dies erfolgt unter der Annahme, dass das eigene Fahrzeug 1 mit einer konstanten Beschleunigung a1 während der Reaktionszeit t1 fährt:

$$v1\_t1 = v1 + a1 \cdot t1 \qquad \text{Gleichung 13}$$

Diese Gleichung 13 gibt somit die Geschwindigkeit des eigenen Fahrzeuges 1 nach der Reaktionszeit t1 an. Auf Basis von v1_t1 und s1_br wird die erforderliche Beschleunigung des eigenen Fahrzeuges 1 als zweite Soll-Beschleunigung a1_d_2 ermittelt durch

$$a1\_d\_2 = -\frac{(v1\_t1)^2}{2 \cdot s1\_br} \qquad \text{Gleichung 14}$$

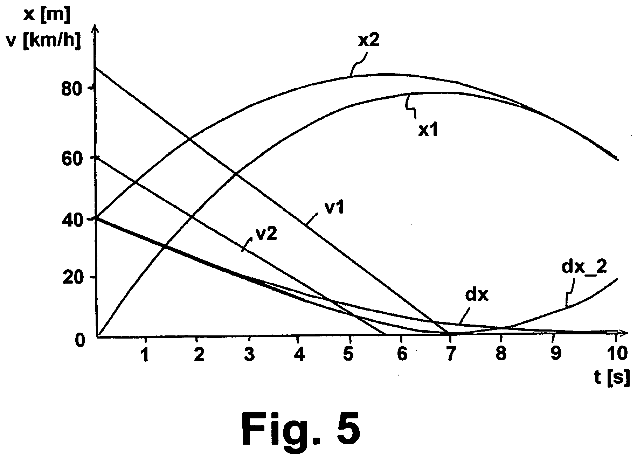

Die in Gleichung 14 ermittelte zweite Soll-Beschleunigung a1_d_2 stellt somit die Bedarfsverzögerung des zweiten Bewertungsverfahrens BV2 dar und wird im folgenden Beispiel herangezogen. Die Fahrsituation dieses Beispiels ist ähnlich dem Beispiel 1 der Figur 2, um einen direkten Vergleich der beiden Ansätze zur Berechnung der Soll-Beschleunigung bzw. Bedarfsverzögerung zu ermöglichen. Das vordere Fahrzeug 2 beschleunigt (bremst) mit a2 = -3 $m/s^2$ von einer anfänglichen zweiten Geschwindigkeit von v2=60 km/h. Das eigene Fahrzeug 1 hat eine anfängliche Geschwindigkeit von v1=90 km/h. Der Wert für dx_min wird auf 1 m gesetzt, und der anfängliche Relativabstand dx_0 zwischen den beiden Fahrzeugen 1 und 2 beträgt dx_0 = 60 m. Die Reaktionszeit t1 beträgt 1 s. Das zweite Bewertungsverfahren BV2 gemäß Gleichung 14 führt zu einer Bedarfsverzögerung (zweiten Soll-Beschleunigung) a1_d_2 von -3,9 $m/s^2$. Hingegen führte das Bewegungsgleichungs-Bewertungsverfahren BV1 nach Gleichung 7 zu einem Wert der ersten Soll-Beschleunigung von a1_d_1 von -4,3 $m/s^2$, der wie oben beschrieben als unzulässiges Ergebnis zu betrachten ist, da Gleichung 7 ein Ergebnis wiedergibt, dessen Zeitpunkt nach dem Stillstand des ersten eigenen Fahrzeuges 1 und des zweiten vorderen Fahrzeuges 2 liegt, bei dem das erste eigene Fahrzeug 1 und das zweite vordere Fahrzeug 2 rückwärts fahren. In Figur 5 werden diese Relationen dargestellt durch die bereits aus Figur 2 bekannten Kurven bzw. Graphen, und den weiteren Kurven.

Das zweite Bewertungsverfahren BV2 berücksichtigt somit nur die Endpunkte der Situation, wenn das erste eigene Fahrzeug 1 und das zweite vordere Fahrzeug 2 zum Stillstand gelangt sind; die Abbremsphasen werden nicht separat für das erste eigene Fahrzeug 1 und das vordere Fahrzeug 2 betrachtet. Der Abbremsweg s2_stop des vorderen Fahrzeuges 2 wird verwendet für die Berechnung von s1_br. Durch explizite Berechnung dieses Wertes wird eine unerwünschte Betrachtung der Rückwärtsbewegung des vorderen Fahrzeuges 2 vermieden. Somit wird bei diesem Ansatz ein Stillstand des vorderen, zweiten Fahrzeuges 2 nach dem Abbremsvorgang betrachtet. Dies wird durch die Kurve x2 in Figur 5 dargestellt. Sie stellt diesen Stillstand bzw. diese feste Position dar. In Fig. 5 gilt hierbei x2 = const und v2 = 0, nachdem das vordere, zweite Fahrzeug 2 zum Stillstand gekommen ist. Mit dieser Methode wird es möglich, eine korrekte Soll-Beschleunigung in derartigen Situationen zu berechnen, in denen das eigene Fahrzeug 1 den Stillstand erreicht, nachdem das vordere Fahrzeug 2 stillsteht.

Somit zeigen die Kurven in Fig. 5, das die Gleichung 14 den korrekten Wert für die Soll-Beschleunigung in dieser Situation wiedergibt, da sie exakt diejenige Beschleunigung darstellt, die erforderlich ist, um eine Kollision mit dem vorderen Fahrzeug 2 zu vermeiden und zum Stillstand des ersten, eigenen Fahrzeuges 1 bei einem Abstand von 1 m hinter dem vorderen Fahrzeug 2 zu kommen. Jede stärkere Abbremsung würde auch eine Kollision mit dem vorderen Fahrzeug 2 verhindern, würde jedoch den Stillstand zu früh, d.h. bei einem größeren Relativabstand dx als dem angestrebten Wert von dx_min=1m erreichen. Somit würde dies bei einem AEBS zu einer zu frühen Aktivierung des Bremssystems führen.

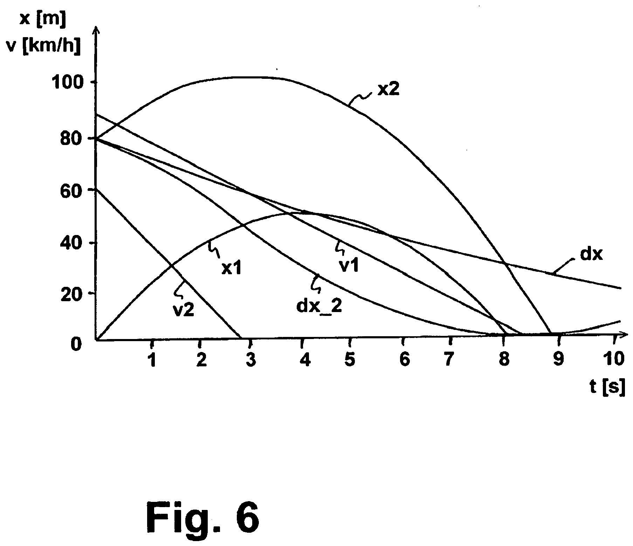

Das zweite Beispiel des zuvor gezeigten Bewegungsgleichungs-Bewertungsverfahrens BV1 zeigt eine weitere Situation, in der das Bewegungsgleichungs-Bewertungsverfahren BV1 zu einem zu hohen Wert für die erste Soll-Beschleunigung a1_d_1 führt. Diese Situationen sind im Allgemeinen gekennzeichnet durch einen großen Relativabstand dx zwischen dem ersten eigenen Fahrzeug 1 und dem zweiten, vorderen Fahrzeug 2 und einer starken Verzögerung a2 des vorderen Fahrzeuges 2. Das mit Bezug zu Fig. 3 beschriebene Beispiel verwendet eine anfängliche zweite Geschwindigkeit v2=60 km/h des vorderen Fahrzeuges 2, eine anfängliche Geschwindigkeit v1=90 km/h des eigenen Fahrzeuges 1, einen Minimalabstand dx_min=1m, eine zweite Beschleunigung a2 = -6 m/s$^2$ des vorderen Fahrzeuges 2 und einen anfänglichen Relativabstand dx_0 = 90 m. in diesem Beispiel führte Gleichung 7 zu einer ersten Soll-Beschleunigung von a1_d_1 von -7,3 m/s$^2$. Hingegen führt Gleichung 14 zu einer zweiten Soll-Beschleunigung von a1_d_2 = -3,6 m/s$^2$ in dieser Situation. Die resultierenden Bewegungen gemäß den beiden Verzögerungswerten sind in Fig. 6 gezeigt.

Das vordere Fahrzeug 2 erreicht einen Stillstand bei t=2,8 s. Der Wert für a1_d_1 gemäß dem oben beschriebenen Bewegungsgleichungs-Bewertungsverfahren BV1 ist zu groß und führt zu einem Abstand beim Stillstand von 45,1 m, wie oben ausgeführt. Hingegen führt das zweite Bewertungsverfahren BV2 zu einem Wert der zweiten Soll-Beschleunigung a1_d_2 von -3,6 m/s$^2$, der der minimalen Verzögerung entspricht, die erforderlich ist, um die Kollision mit dem vorderen Fahrzeug 2 dieser Situation zu vermeiden. Fig. 6 zeigt, dass das eigene Fahrzeug 1 den Stillstand bei t=8 s. und einem Relativabstand von 1 m erreicht.

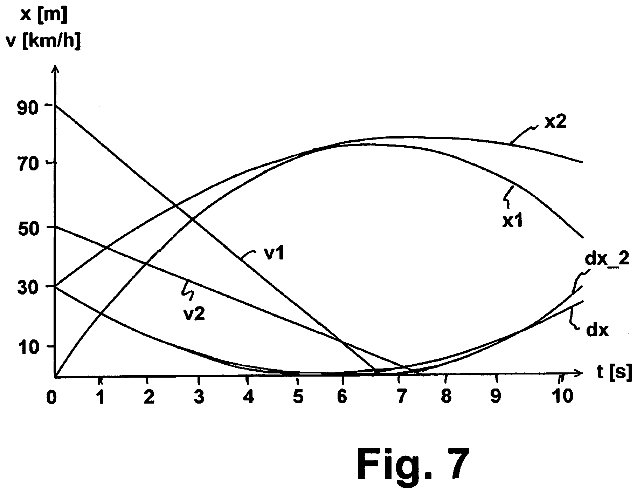

Das oben im Zusammenhang mit dem Bewegungsgleichungs-Bewertungsverfahren BV1 gezeigte Beispiel 3 liefert hingegen mit dem Bewegungsgleichungs-Bewertungsverfahren BV1 ein korrektes Ergebnis für die erste Soll-Beschleunigung a1_d_1. Hierbei hat das vordere Fahrzeug 2 mit a2 = -2 m/s$^2$ bei einer anfänglichen Geschwindigkeit von 50 km/h verzögert. Das eigene Fahrzeug 1 hat eine anfängliche Geschwindigkeit von 90 km/h. Der Wert für dx min wird auf 1 m gesetzt und der anfängliche Relativabstand dx_0 zwischen dem ersten eigenen Fahrzeug 1 und dem zweiten vorderen Fahrzeug 2 beträgt 40 m. In diesem Beispiel führt die Gleichung 7 zu einer ersten Soll-Beschleunigung von a1_d_1 = -5,2 m/s$^2$. Gleichung 14 führt hingegen zu einem Ergebnis von a1_d_2 = -5,02 m/s$^2$ für diese Situation. Die resultierenden Bewegungen für beide Beschleunigungswerte sind in Fig. 7 dargestellt.

In Fig. 7 ist gezeigt, dass die Verzögerung mit der nach dem zweiten Bewertungsverfahren BV2 ermittelten zweiten Soll-Beschleunigung a1_d_2 zu einem Stillstand des eigenen Fahrzeuges 1 bei t = 6 s führt. Der zurückgelegte Weg des eigenen Fahrzeuges 1, der als x1 gezeigt ist, ist 1 m kleiner als die Position x2 des vorderen Fahrzeuges 2, wenn das vordere Fahrzeug 2 nach t = 7 s. stillsteht. Aber bevor das eigene Fahrzeug 1 mit einer zweiten Soll-Beschleunigung a1_d_2 den Stillstand erreicht, wird der durch das zweite Bewertungsverfahren BV2 ermittelte Relativabstand dx_2 zwischen dem eigenen, ersten Fahrzeug 1 und dem vorderen, zweiten Fahrzeug 2 kleiner 0. Dies bedeutet, dass das eigene Fahrzeug 1 mit dem vorderen Fahrzeug 2 kollidiert, bevor das eigene Fahrzeug 1 und das vordere Fahrzeug 2 den Stillstand erreichen. Somit ist der Wert des zweiten Bewertungsverfahrens BV2 für die zweite Soll-Beschleunigung a1_d_2 in diesem Beispiel nicht korrekt, bzw. führt nicht zu einer korrekten Berechnung des Verzögerungswertes, um eine Kollision mit dem vorderen Fahrzeug 2 zu vermeiden. Vielmehr ist in einem derartigen Fall das Bewegungsgleichungs-Bewertungsverfahren BV1, d.h. a1_d_1 nach Gleichung 7, heranzuziehen.

Das zweite Bewertungsverfahren BV2 betrachtet somit lediglich die Endpunkte der Bremssituation, wenn beide Fahrzeuge 1, 2 zum Stillstand gelangt sind. Es überprüft allerdings nicht die während des Abbremsvorgangs möglicherweise auftretenden Kreuzungspunkte der Bewegungsbahnen beider Fahrzeuge 1,2, d.h. zwischendurch erfolgende Kollisionen.

Somit werden erfindungsgemäß beide Bewertungsverfahren BV1, BV2 für eine korrekte Berechnung des Bremskriteriums herangezogen.

Für den spezifischen Fall, dass das vordere Fahrzeug 2 stillsteht und das eigene Fahrzeug 1 sich nähert, führen beide Bewertungsverfahren BV1,BV2 zum gleichen Ergebnis, da

$$-dv\_t1 = v1\_t1,$$

$$dx\_t1 - dx\_min = s1\_br$$

$$a2 = 0$$

Nachfolgend werden somit unter Berücksichtigung der obigen Ausführungen verschiedene Fälle für die Verwendung der Bewertungsverfahren BV1 und BV2 unterschieden, die im Wesentlichen von der Beschleunigung a2 des vorderen Fahrzeugs 2 und der Relativgeschwindigkeit zwischen den Fahrzeugen 1 und 2 nach Ablauf der Reaktionszeit dv\_t1 abhängen.

Zur Prüfung der Notwendigkeit einer automatischen Bremsbetätigung zur Kollisionsvermeidung werden die folgenden Fälle geprüft:

In einem ersten Kriterium K1 wird überprüft, ob der Abstand dx\_t1 zwischen den Fahrzeugen 1 und 2 nach der Reaktionszeit t1 kleiner als der Minimalabstand dx\_min ist: dx\_t1 < dx\_min.

Ist das erste Kriterium K1 erfüllt, ergibt sich die Notwendigkeit einer automatischen Abbremsung, da der Fahrer nicht in der Lage ist, selbsttätig eine Verzögerung einzuleiten.

Falls das erste Kriterium K1 nicht zutreffend ist, werden in einem weiteren Kriterium K2 vier Fälle unterschieden und geprüft: K2a, K2b, K2c, K2d. Zur Fallunterscheidung werden jeweils die Beschleunigungen a2 des vorderen Fahrzeuges 2 und die Relativgeschwindigkeit nach Ablauf der Reaktionszeit dv\_t1 herangezogen.

Das zweite Kriterium K2a wird überprüft, falls a2<0 und dv\_t1<0 ist. Hier wird dann zunächst das Bewegungsgleichungs-Bewertungsverfahren BV1 überprüft. Falls dieses nicht zutrifft, wird das zweite Bewertungsverfahren BV2 verwendet.

Falls das zweite Kriterium K2a erfüllt ist, d.h. die ermittelte Soll-Beschleunigung a1\_d\_1 bzw. a\_1\_d2 einen Grenzwert überschreitet, ergibt sich die Notwendigkeit einer automatischen Abbremsung des eigenen Fahrzeuges 1, da der Fahrer nach Ablauf seiner Reaktionszeit nicht in der Lage sein wird, die notwendige Höhe der Verzögerung selbsttätig einzustellen.

Das dritte Kriterium K2b wird überprüft, falls a2<0 und dv\_t1≥0 ist. Hier wird stets nur mit Hilfe des zweiten Bewertungsverfahrens BV2 geprüft. Hierdurch wird die Schwäche des Bewegungsgleichungs-Bewertungsverfahrens BV1 in denjenigen Situationen, bei denen eine starke Verzögerung des vorderen Fahrzeuges 2 vorliegt, vermieden.

Falls das dritte Kriterium K2b erfüllt ist, d.h. die ermittelte zweite Soll-Beschleunigung a1\_d\_2 einen Grenzwert überschreitet, ergibt sich die Notwendigkeit einer automatischen Abbremsung des eigenen Fahrzeuges 1, da der Fahrer nach Ablauf seiner Reaktionszeit nicht in der Lage sein wird, die notwendige Höhe der Verzögerung selbsttätig einzustellen.

Das vierte Kriterium K2c wird überprüft, falls a2≥0 und dv\_t1 <0 ist. Hier wird stets nur mit Hilfe des Bewegungsgleichungs-Bewertungsverfahrens BV1 geprüft, da lediglich Bewertungsverfahren BV1 relevant ist. Das zweite Bewertungsverfahren BV2 ist hier nicht anwendbar, da bei einer positiven Beschleunigung a2 des vorderen Fahrzeuges 2 kein Abbremsweg s2\_stop ermittelt werden kann. Die Schwäche des Bewegungsgleichungs-Bewertungsverfahrens BV1 in Situationen, die durch eine starke Verzögerung des vorderen Fahrzeuges 2 gekennzeichnet sind, ist in derartigen Situationen nicht relevant, da nur positive Werte für a2 betrachtet werden. Falls das vierte Kriterium K2c erfüllt ist, d.h. die ermittelte erste Soll-Beschleunigung a1\_d\_1 einen Grenzwert überschreitet, ergibt sich die Notwendigkeit einer automatischen Abbremsung des eigenen Fahrzeuges 1, da der Fahrer nach Ablauf seiner Reaktionszeit nicht in der Lage sein wird, die notwendige Höhe der Verzögerung selbsttätig einzustellen.

Das fünfte Kriterium K2d wird überprüft, falls a2≥0 und dv\_t1≥0 ist. Hier fährt das vordere Fahrzeug 2 beschleunigt vom eigenen Fahrzeug 1 weg. Dieser Fall ist somit insgesamt ungefährlich, so dass keinerlei Notwendigkeit zur Einleitung einer automatischen Notbremsung besteht.

Die Angabe "erstes, ... fünftes Kriterium" drückt hierbei keine Reihenfolge oder Wertigkeit aus.

Somit kann gemäß den Kriterien K1, K2a bis K2d ein Regelalgorithmus gebildet werden, gemäß dem zunächst das erste Kriterium K1 überprüft wird und nachfolgend die Fallunterscheidung in den Kriterien K2a, K2b, K2c und K2d erfolgt, in denen dann wie beschrieben die Soll-Beschleunigung (Bedarfsverzögerung) entweder nach Gleichung 7 als a1\_d\_1 oder nach Gleichung 14 als a1\_d\_2 ermittelt wird.

Bezugszeichenliste

1    eigenes Fahrzeug
2    vorderes Objekt/Fahrzeug
3    Fahrbahn
4    Abstandssensor
5    Fahrdynamiksystem
6    Steuereinrichtung
7    Geschwindigkeitssensor
8    Fahrzeugbremsen
9    Warn-Anzeige

S1    Scheitelpunkt von x1
S2    Scheitelpunkt von x2

x1      Position des ersten Fahrzeugs
x2      Position des zweiten Fahrzeugs
x1_0    Position des ersten Fahrzeugs zum Zeitpunkt t=0
x2_0    Position des zweiten Fahrzeugs zum Zeitpunkt t=0
v1      Geschwindigkeit des ersten Fahrzeugs
v1_t1   Geschwindigkeit des ersten Fahrz. nach der Reaktionszeit t1
v2      Geschwindigkeit des zweiten Fahrzeugs
a1      Längsbeschleunigung des ersten Fahrzeugs
a2      Längsbeschleunigung des zweiten Fahrzeugs
a1_d_1  erste Soll-Beschleunigung
a1_d_2  zweite Soll-Beschleunigung
dx      Relativabstand
dx_min  Minimalabstand
dx_0    anfänglicher Relativabstand zum Zeitpunkt t=0
dx_t1   Relativabstand nach der Reaktionszeit t1
dx_2    Relativabstand nach BV 2
s1_br   verfügbarer Bremsweg des ersten Fahrzeuges
s1_react während t1 zurückgelegter Weg des ersten Fahrzeuges
s2_stop Abbremsweg des zweiten Fahrzeugs bis zum Stillstand

dv      Relativgeschwindigkeit
dv_t1   Relativgeschwindigkeit nach der Reaktionszeit t1

M1    Relativabstands-Messsignal
M2    Geschwindigkeits-Messsignal
M3    Brems-Steuersignale
Si1   Warn-Anzeigesignal

t       Zeit
t1      Reaktionszeit
t1_dv   Eigen-Abbremszeit des ersten Fahrzeugs (dv=0; dx=dx_min)
t2_stop Objekt-Abbremszeit des zweiten Fahrzeugs/Objekts bis v2=0
BV1     Bewertungsverfahren 1
BV2     Bewertungsverfahren 2
BV0     vorgeschaltetes Bewertungsverfahren

K1    erstes Kriterium
K2    weiteres Kriterium
K2a   zweites Kriterium
K2b   drittes Kriterium
K2c   viertes Kriterium

K2d     fünftes Kriterium
Zk1     Zulässigkeitskriterium

**Patentansprüche**

1. Verfahren zur Ermittlung einer Notbremssituation eines ersten, eigenen Fahrzeuges (1), bei dem das eigene Fahrzeug (1) mindestens folgende Zustandsgrößen ermittelt:

   seine eigene Fahrgeschwindigkeit (v1),
   seine eigene Längsbeschleunigung (a1),
   seinen Relativabstand (dx) zu einem vorderen Objekt (2), und
   eine zweite Geschwindigkeit (v2) und zweite Beschleunigung (a2) des vorderen Objektes (2),
   wobei aus den Zustandsgrößen (v1, a1, dx, v2, a2) mittels eines Bewertungsverfahrens (BV1, BV2) ermittelt wird, ob eine Notbremssituation vorliegt,
   **dadurch gekennzeichnet, dass**
   in Abhängigkeit der Zustandsgrößen (v1, a1, dx, v2, a2) mindestens zwei verschiedene Bewertungsverfahren (BV1, BV2) zur Bewertung, ob eine Notbremssituation vorliegt, herangezogen werden,
   wobei in Abhängigkeit der Zustandsgrößen (v1, a1, dx, v2, a2) ermittelt wird, welches der mindestens zwei verschiedenen Bewertungsverfahren (BV1, BV2) herangezogen wird,
   wobei die verschiedenen Bewertungsverfahren (BV1, BV2), mindestens folgende Bewertungsverfahren umfassen:

   ein Bewegungsgleichungs-Bewertungsverfahren (BV1), bei dem ein Bewegungsgleichungssystem des eigenen Fahrzeuges (1) und des vorderen Objektes (2) ermittelt wird, und
   ein Bremsweg-Bewertungsverfahren (BV2), bei dem ein Bremsweg (s1_br) des eigenen Fahrzeuges (1) ermittelt wird.

2. Verfahren nach Anspruch 1, **dadurch gekennzeichnet, dass** anhand eines Zulässigkeitskriteriums bestimmt wird, ob das erste Bewertungsverfahren (BV1) oder das mindestens zweite Bewertungsverfahren (BV2) zulässig ist und verwendet wird,

3. Verfahren nach Anspruch 2, **dadurch gekennzeichnet, dass** in dem Fall, dass eine Eigen-Abbremszeit (t1_dv), die von dem eigenen Fahrzeug (1) bis zum Erreichen eines Minimalabstandes (dx_min) und gleicher Geschwindigkeit (dv=0) mit dem vorderen Objekt (2) benötigt wird, kleiner oder gleich einer Objekt-Abbrems-Zeit (t2_stop) ist, die das vordere Objekt (2) für eine Abbremsung bis zum Stillstand (v2 (t2_stop)=0) benötigt, das erste Bewertungsverfahren (BV1) zulässig ist und verwendet wird und, in dem Fall, dass die Eigen-Abbremszeit (t1_dv) größer der Objekt-Abbrems-Zeit (t2_stop) ist, das mindestens zweite Bewertungsverfahren (BV2) zulässig ist und verwendet wird.

4. Verfahren nach einem der vorherigen Ansprüche, **dadurch gekennzeichnet, dass** im Falle der Ermittlung einer Notbremssituation selbsttätig ein Notbremsvorgang eingeleitet und/oder ein Warnanzeigesignal (Si1) ausgegeben wird.

5. Verfahren nach einem der vorherigen Ansprüche, **dadurch gekennzeichnet, dass** in die Ermittlung, welches der Bewertungsverfahren (BV1, BV2) heranzuziehen ist, und/oder in einzelne Bewertungsverfahren ergänzend eine Reaktionszeit (t1) eines fahrzeuginternen Bremssystems nach Einleitung einer automatischen Notbremsung und/oder eine Reaktionszeit (t1) des Fahrers nach Ausgabe des Warn-Anzeigesignals (Si1) über eine Warn-Anzeige (9) einbezogen wird.

6. Verfahren nach Anspruch 5, **dadurch gekennzeichnet, dass** in einem ersten Schritt vorab ein vorgeschaltetes Bewertungsverfahren (BV0) eingesetzt wird, bei dem bewertet wird, ob ein erstes Kriterium (K1) erfüllt ist, wonach der aktuelle Relativabstand (dx) des eigenen Fahrzeuges (1) zu dem vorderen Objekt (2) nach der Reaktionszeit (t1) kleiner als ein einzuhaltender Minimalabstand (dx_min) ist,
   wobei bei Erfüllen des ersten Kriteriums (K1) auf eine Notbremssituation erkannt wird, und bei Nicht-Erfüllen des ersten Kriteriums (K1) nachfolgend ermittelt wird, welches der weiteren Bewertungsverfahren (BV1,BV2) heranzuziehen ist.

**7.** Verfahren nach Anspruch 6, **dadurch gekennzeichnet, dass** bei Nicht-Erfüllen des ersten Kriteriums (K1) nachfolgend eine Bewertung auf Grundlage der zweiten Beschleunigung (a2) des vorderen Objektes (2) und der Relativgeschwindigkeit nach der Reaktionszeit (dv_t1) des vorderen Objektes (2) zu dem eigenen Fahrzeug (1) durchgeführt wird, wobei die Relativgeschwindigkeit nach der Reaktionszeit (dv_t1) als Differenz der zweiten Geschwindigkeit (v2) minus der eigenen Geschwindigkeit (v1) gebildet ist.

**8.** Verfahren nach Anspruch 6 oder 7, **dadurch gekennzeichnet, dass** bei Nicht-Erfüllen des ersten Kriteriums (K1) das geeignete Bewertungsverfahren (BV1, BV2) in Abhängigkeit weiterer Kriterien (K2a, K2b, K2c, K2d) ermittelt wird, wobei die weiteren Kriterien (K2a, K2b, K2c, K2d) eines oder mehrere der folgenden Kriterien umfassen:

- ein zweites Kriterium (K2a), das erfüllt ist, wenn die Beschleunigung (a2) des vorderen Objektes (2) negativ und die Relativgeschwindigkeit nach der Reaktionszeit (dv_t1) negativ ist,
wobei bei Erfüllen des zweiten Kriteriums (K2a) ein Zulässigkeitskriterium (zk1) für das erste Bewertungsverfahren (BV1) überprüft und bei Erfüllung des Zulässigkeitskriterium (zk1) das erste Bewertungsverfahren (BV1) durchgeführt, und bei Nicht-Erfüllen des Zulässigkeitskriteriums (zk1) das zweite Bewertungsverfahren (BV2) herangezogen wird,
- ein drittes Kriterium (K2b), das erfüllt ist, wenn die zweite Beschleunigung (a2) negativ und die Relativgeschwindigkeit nach der Reaktionszeit (dv_t1) größer oder gleich Null ist,
wobei bei Erfüllen des dritten Kriteriums (K2b) das zweite Bewertungsverfahren (BV2) herangezogen wird,
- ein viertes Kriterium (K2c), das erfüllt ist, wenn die zweite Beschleunigung (a2) größer oder gleich Null und die Relativgeschwindigkeit nach der Reaktionszeit (dv_t1) negativ ist, und bei Erfüllen des vierten Kriteriums (K2c) das erste Bewertungsverfahren (BV1) herangezogen wird, und
- ein fünftes Kriterium (K2d), dass erfüllt ist, wenn die zweite Beschleunigung (a2) größer oder gleich Null und die Relativgeschwindigkeit nach der Reaktionszeit (dv_t1) größer oder gleich Null ist,

und bei Erfüllen des fünften Kriteriums (K2d) keine Ermittlung einer Notbremssituation durchgeführt wird.

**9.** Verfahren nach einem der vorherigen Ansprüche, **dadurch gekennzeichnet, dass** mit den Bewertungsverfahren (BV1,BV2) jeweils eine Soll-Beschleunigung (a1_d_1,a2_d_2) ermittelt wird.

**10.** Verfahren nach einem der vorherigen Ansprüche, **dadurch gekennzeichnet, dass** in dem ersten Bewertungsverfahren (BV1) die Bewegungsgleichungen des eigenen Fahrzeuges (1) und des vorderen Objektes (2) in zweiter Ordnung in der Zeit aufgestellt werden und aufweisen:

einen aktuellen Relativabstand (dx), aktuelle Beschleunigungswerte (a1, a2) des eigenen Fahrzeuges (1) und des vorderen Objektes (2) und aktuelle Geschwindigkeiten (v1, v2) des eigenen Fahrzeuges (1) und des vorderen Objektes (2),
und ermittelt wird, ob sich aus den Bewegungsgleichungen ein Unterschreiten des Minimalabstandes (dx_min) zwischen dem eigenen Fahrzeug (1) und dem vorderen Objekt (2) ergibt.

**11.** Verfahren nach Anspruch 9 oder 10, **dadurch gekennzeichnet, dass** bei dem ersten Bewertungsverfahren (BV1) eine erste Soll-Beschleunigung a1_d_1 ermittelt wird unter Verwendung der Gleichung

$$a1\_d\_1 = a2 - \frac{(dv\_t1)^2}{2 \cdot (dx\_t1 - dx\_min)} \qquad \text{(Gleichung 7)},$$

wobei a2 die zweite Beschleunigung, dv_t1 die prädizierte Relativgeschwindigkeit nach der Reaktionszeit (t1), dx_t1 der prädizierte Relativabstand nach der Reaktionszeit (t1) und dx_min der Minimalabstand ist.

**12.** Verfahren nach einem der vorherigen Ansprüche, **dadurch gekennzeichnet, dass** bei dem zweiten Bewertungsverfahren (BV2) eine zweite Soll-Beschleunigung (a1_d_2) ermittelt wird aus einer Berechnung, welcher Bremsweg (s1_br) für das eigene Fahrzeug (1) bei Einleitung einer Bremsung nach der Reaktionszeit (t1) verbleibt auf Grundlage der aktuellen Werte der eigenen Geschwindigkeit (v1), zweiten Geschwindigkeit (v2) und zweiten Beschleunigung (a2), dem aktuellen Relativabstand (dx) und dem festen Minimalabstand (dx_min).

**13.** Verfahren nach Anspruch 12, **dadurch gekennzeichnet, dass** die zweite Soll-Beschleunigung (a1_d_2) ermittelt wird auf Grundlage der Gleichung

$$a1\_d\_2 = \frac{(v1\_t1)^2}{2 \cdot s1\_br} \quad \text{(Gleichung 14)}$$

mit v1_t1 der aus der aktuellen eigenen Geschwindigkeit (v1) und aktuellen eigenen Beschleunigung (a1) ermittelten eigenen Geschwindigkeit (v1) des eigenen Fahrzeugs (1) nach der Reaktionszeit (t1) und dem verfügbaren Bremsweg (s1_br) des eigenen Fahrzeuges (1) bei Einleitung der Bremsung nach der Reaktionszeit (t1).

14. Steuereinrichtung (6) für ein Fahrdynamik-Regelsystem (5) eines eigenen Fahrzeuges (1) zur Durchführung eines Verfahrens nach einem der vorherigen Ansprüche,
wobei die Steuereinrichtung (6) zur Ermittlung von Zustandsgrößen (v1, a1, dx, v2, a2) aufnimmt:

ein Relativabstands-Messsignal (M1) eines Abstandssensors (4) zur Ermittlung eines Relativabstandes (dx) zu einem vorausfahrenden vorderen Objekt (2),
ein Geschwindigkeits-Messsignal (M2) von einem Geschwindigkeitssensor (7) zur Ermittlung einer eigenen Geschwindigkeit (v1) des eigenen Fahrzeuges (1),
wobei die Steuereinrichtung (6) weiterhin als Zustandsgrößen eine eigene Beschleunigung (a1) des eigenen Fahrzeuges (1), eine zweite Geschwindigkeit (v2) des vorderen Objektes (2) und eine zweite Beschleunigung (a2) des vorderen Objektes (2) ermittelt oder misst und intern oder extern gespeicherte Daten über eine Reaktionszeit (t1) und
einen für den Relativabstand einzuhaltenden Minimalabstand (dx_min) aufnimmt,
wobei die Steuereinrichtung (6) aus den Zustandsgrößen (v1, a1, dx, v2, a2) mittels eines Bewertungsverfahrens (BV1, BV2) ermittelt, ob eine Notbremssituation vorliegt,
wobei die Steuereinrichtung (6) in Abhängigkeit der Zustandsgrößen (v1, a1, dx, v2, a2) verschiedene Bewertungsverfahren (BV1, BV2) zur Bewertung, ob eine Notbremssituation vorliegt, heranzieht,
wobei die Steuereinrichtung (6) in Abhängigkeit der Zustandsgrößen (v1, a1, dx, v2, a2) ermittelt, welches der mehreren Bewertungsverfahren (BV1, BV2) heranzuziehen ist,
wobei die verschiedenen Bewertungsverfahren (BV1, BV2) mindestens folgende Bewertungsverfahren umfassen:

ein Bewegungsgleichungs-Bewertungsverfahren (BV1) zur Ermittlung eines Bewegungsgleichungssystems des eigenen Fahrzeuges (1) und des vorderen Objektes (2), und
ein Bremsweg-Bewertungsverfahren (BV2) zur Ermittlung eines verfügbaren Bremsweges (s1_br) des eigenen Fahrzeuges (1),

wobei die Steuereinrichtung (6) in Abhängigkeit der Ermittlung Brems-Steuersignale (M3) an Fahrzeugbremsen (8) und /oder ein Warn-Anzeigesignal (Si1) an den Fahrer ausgibt.

15. Fahrdynamik-Regelsystem (5) insbesondere Brems-Regelsystem oder Kolonnen-Fahrsystem, insbesondere zur Durchführung eines Verfahrens nach einem der Ansprüche 1 bis 13,
wobei das Fahrdynamik-Regelsystem (5) eine Steuereinrichtung (6) nach Anspruch 14, den Abstandssensor (4), den Geschwindigkeitssensor (7) und die Fahrzeugbremsen (8) aufweist.

**Claims**

1. Method for determining an emergency braking situation of a first subject vehicle (1), with which the subject vehicle (1) determines at least the following state variables:

its own speed of travel (v1),
its own longitudinal acceleration (a1),
its relative distance (dx) to an object ahead (2), and
a second speed (v2) and second acceleration (a2) of the object ahead (2),
wherein it is determined from the state variables (v1, a1, dx, v2, a2) by means of an assessment method (BV1, BV2) whether an emergency braking situation exists,
**characterized in that**
depending on the state variables (v1, a1, dx, v2, a2) at least two different assessment methods (BV1, BV2) are used for assessing whether an emergency braking situation exists,

wherein depending on the state variables (v1, a1, dx, v2, a2) it is determined which of the at least two different assessment methods (BV1, BV2) is used, wherein the different assessment methods (BV1, BV2) include at least the following assessment methods:

an equation of motion assessment method (BV1), with which an equation of motion system of the subject vehicle (1) and of the object ahead (2) is determined, and
a braking distance assessment method (BV2), with which a braking distance (s1_br) of the subject vehicle (1) is determined.

2. Method according to Claim 1, **characterized in that** using an admissibility criterion it is determined whether the first assessment method (BV1) or the at least second assessment method (BV2) is admissible and is used.

3. Method according to Claim 2, **characterized in that** in the case in which a subject braking time (t1_dv) required by the subject vehicle (1) to reach a minimum distance (dx_min) and the same speed (dv=0) as the object ahead (2) is less than or equal to an object braking time (t2_stop) required by the object ahead (2) to brake to rest (v2 (t2_stop)=0), the first assessment method (BV1) is admissible and is used, and in the case in which the subject braking time (t1_dv) exceeds the object braking time (t2_stop) the at least second assessment method (BV2) is admissible and is used.

4. Method according to any one of the preceding claims, **characterized in that** in the case of determining an emergency braking situation, an emergency braking process is automatically initiated and/or a warning indication signal (Si1) is automatically output.

5. Method according to any one of the preceding claims, **characterized in that** in the determination of which of the assessment methods (BV1, BV2) is to be used and/or in individual assessment methods, a response time (t1) of a vehicle-internal brake system after initiating automatic emergency braking and/or a response time (t1) of the driver after outputting the warning indication signal (Si1) by means of a warning display (9) are additionally included.

6. Method according to Claim 5, **characterized in that** in a first step an advance assessment method (BV0) is used in advance, with which it is assessed whether a first criterion (K1) is fulfilled, whereafter the current relative distance (dx) of the subject vehicle (1) to the object ahead (2) following the response time (t1) is less than minimum distance (dx_min) that is to be maintained, wherein if the first criterion (K1) is fulfilled an emergency braking situation is recognized, and if the first criterion (K1) is not fulfilled it is subsequently determined which of the other assessment methods (BV1, BV2) is to be used.

7. Method according to Claim 6, **characterized in that** if the first criterion (K1) is not fulfilled, subsequently an assessment is carried out on the basis of the second acceleration (a2) of the object ahead (2) and the relative speed of the object ahead (2) to the subject vehicle (1) following the response time (dv_t1), wherein the relative speed following the response time (dv_t1) is formed as the difference of the second speed (v2) minus the speed (v1) of the subject vehicle.

8. Method according to Claim 6 or 7, **characterized in that** if the first criterion (K1) is not fulfilled, the suitable assessment method (BV1, BV2) is determined depending on other criteria (K2a, K2b, K2c, K2d), wherein the other criteria (K2a, K2b, K2c, K2d) include one or more of the following criteria:

- a second criterion (K2a) that is fulfilled if the acceleration (a2) of the object ahead (2) is negative and the relative speed following the response time (dv_t1) is negative,
wherein if the second criterion (K2a) is fulfilled an admissibility criterion (zk1) for the first assessment method (BV1) is checked and if the admissibility criterion (zk1) is fulfilled the first assessment method (BV1) is carried out, and if the admissibility criterion (zk1) is not fulfilled the second assessment method (BV2) is used,
- a third criterion (K2b) that is fulfilled if the second acceleration (a2) is negative and the relative speed following the response time (dv_t1) is greater than or equal to zero,
wherein if the third criterion (K2b) is fulfilled the second assessment method (BV2) is used,
- a fourth criterion (K2c) that is fulfilled if the second acceleration (a2) is greater than or equal to zero and the relative speed following the response time (dv_t1) is negative, and if the fourth criterion (K2c) is fulfilled the first assessment method (BV1) is used, and
- a fifth criterion (K2d) that is fulfilled if the second acceleration (a2) is greater than or equal to zero and the relative speed following the response time (dv_t1) is greater than or equal to zero,

and if the fifth criterion (K2d) is fulfilled, no determination of an emergency braking situation is carried out.

9. Method according to any one of the preceding claims, **characterized in that** with the assessment methods (BV1, BV2) a target acceleration (a1_d_1,a2_d_2) is determined in each case.

10. Method according to any one of the preceding claims, **characterized in that** in the first assessment method (BV1) the second order equations of motion in the time domain of the subject vehicle (1) and of the object ahead (2) are established and comprise:

a current relative distance (dx), current acceleration values (a1, a2) of the subject vehicle (1) and of the object ahead (2) and current speeds (v1, v2) of the subject vehicle (1) and of the object ahead (2), and it is determined whether the distance between the subject vehicle (1) and the object ahead (2) falls below the minimum distance (dx_min) as a result of the equations of motion.

11. Method according to Claim 9 or 10, **characterized in that** with the first assessment method (BV1) a first target acceleration a1_d_1 is determined using the equation

$$\texttt{a1\_d\_1 = a2} - \frac{(dv\_t1)^2}{2 \cdot (dx\_t1 - dx\_\min)} \quad \texttt{(Equation 7),}$$

wherein a2 is the second acceleration, dv_t1 is the predicted relative speed following the response time (t1), dx_t1 is the predicted relative distance following the response time (t1) and dx_min is the minimum distance.

12. Method according to any one of the preceding claims, **characterized in that** with the second assessment method (BV2) a second target acceleration (a1_d_2) is determined from a calculation of the braking distance (s1_br) for the subject vehicle (1) that remains on initiating braking following the response time (t1), based on the current values of the speed (v1) of the subject vehicle, the second speed (v2) and the second acceleration (a2), the current relative distance (dx) and the fixed minimum distance (dx_min).

13. Method according to Claim 12, **characterized in that** the second target acceleration (a1_d_2) is determined based on the equation

$$a1\_d\_2 = \frac{(v1\_t1)^2}{2 \cdot s1\_br} \quad \texttt{(Equation 14)}$$

where v1_t1 is the speed (v1) of the subject vehicle (1) following the response time (t1) determined from the current speed (v1) of the subject vehicle and the current acceleration (a1) of the subject vehicle and the available braking distance (s1_br) of the subject vehicle (1) on initiating braking following the response time (t1).

14. Control device (6) for a driving dynamics control system (5) of a subject vehicle (1) for carrying out a method according to any one of the preceding claims, wherein for determining state variables (v1, a1, dx, v2, a2) the control device (6) receives:

a relative distance measurement signal (M1) of a distance sensor (4) for determining a relative distance (dx) to an object driving ahead (2), a speed measurement signal (M2) from a speed sensor (7) for determining a speed (v1) of the subject vehicle (1), wherein the control device (6) also determines or measures as state variables an acceleration (a1) of the subject vehicle (1), a second speed (v2) of the object ahead (2) and a second acceleration (a2) of the object ahead (2) and receives internally or externally stored data relating to a response time (t1) and a minimum distance (dx_min) to be maintained for the relative distance, wherein the control device (6) determines whether an emergency braking situation exists from the state variables (v1, a1, dx, v2, a2) by means of an assessment method (BV1, BV2), wherein the control device (6), depending on the state variables (v1, a1, dx, v2, a2), uses different assessment methods (BV1, BV2) for assessing whether an emergency braking situation exists, wherein the control device (6), depending on the state variables (v1, a1, dx, v2, a2), determines which of the plurality of assessment methods (BV1, BV2) is to be used,

wherein the different assessment methods (BV1, BV2) comprise at least the following assessment methods:

an equation of motion assessment method (BV1) for determining an equation of motion system of the subject vehicle (1) and of the object ahead (2), and
a braking distance assessment method (BV2) for determining an available braking distance (s1_br) of the subject vehicle (1),

wherein the control device (6), depending on the determination, outputs brake control signals (M3) to vehicle brakes (8) and /or a warning indication signal (Si1) to the driver.

15. Driving dynamics control system (5), especially a brake control system or convoy driving system, especially for carrying out a method according to any one of Claims 1 to 13,
wherein the driving dynamics control system (5) comprises a control device (6) according to Claim 14, the distance sensor (4), the speed sensor (7) and the vehicle brakes (8).

## Revendications

1. Procédé pour déterminer une situation de freinage d'urgence d'un premier véhicule particulier (1), pour lequel le véhicule particulier (1) détermine au moins les grandeurs d'état suivantes :

sa propre vitesse de marche (v1),
sa propre accélération longitudinale (a1),
sa distance relative (dx) par rapport à un objet situé devant (2), et
une deuxième vitesse (v2) et une deuxième accélération (a2) de l'objet situé devant (2),
en déterminant à partir des grandeurs d'état (v1, a1, dx, v2, a2) au moyen d'un procédé d'évaluation (BV1, BV2) s'il y a une situation de freinage d'urgence,
**caractérisé en ce qu'**en fonction des grandeurs d'état (v1, a1, dx, v2, a2), on utilise au moins deux procédés d'évaluation différents (BV1, BV2) pour évaluer s'il y a une situation de freinage d'urgence,
dans lequel en fonction des grandeurs d'état (v1, a1, dx, v2, a2) ; il est déterminé lequel des au moins deux procédés d'évaluation (BV1, BV2) différents est utilisé,
les différents procédés d'évaluation (BV1, BV2) comprenant au moins les procédés d'évaluation suivants :

un procédé d'évaluation à équations du mouvement (BV1) pour lequel un système d'équations de mouvement du véhicule particulier (1) et de l'objet situé devant (2) est déterminé, et
un procédé d'évaluation de distance de freinage (BV2), pour lequel une distance de freinage (s1_br) du véhicule particulier (1) est déterminée.

2. Procédé selon la revendications 1, **caractérisé en ce qu'**à l'aide d'un critère d'admissibilité, on détermine si le premier procédé d'évaluation (BV1) ou l'au moins deuxième procédé d'évaluation (BV2) est admissible et sera utilisé.

3. Procédé selon la revendication 2, **caractérisé en ce que** dans le cas où un temps de freinage propre (t1_dv), qui est nécessaire au véhicule particulier (1) pour atteindre une distance minimale (dx_min) et une vitesse égale (dv=0) à l'objet situé devant (2), est plus faible ou égal à un temps de freinage de l'objet (t2_stop), que nécessite l'objet situé devant (2) pour un freinage jusqu'à l'arrêt (v2 (t2_stop)=0), le premier procédé d'évaluation (BV1) est admissible et sera utilisé et dans le cas où le temps de freinage propre (t1_dv) est plus grand que le temps de freinage de l'objet (t2_stop), l'au moins deuxième procédé d'évaluation (BV2) est admissible et sera utilisé.

4. Procédé selon l'une quelconque des revendications précédentes, **caractérisé en ce que** dans le cas de la détermination d'une situation de freinage d'urgence une opération de freinage d'urgence est automatiquement initiée et/ou un signal d'avertissement (Si1) est émis.

5. Procédé selon l'une quelconque des revendications précédentes, **caractérisé en ce que** lors de la détermination destinée à savoir lequel des procédés d'évaluation (BV1, BV2) doit être utilisé, et/ou dans des procédés d'évaluation individuels, un temps de réaction (t1) d'un système de freinage interne au véhicule après introduction d'un freinage d'urgence automatique et/ou un temps de réaction (t1) du conducteur après émission du signal d'avertissement (Si1) par un affichage d'avertissement (9), est incorporé en complément.

**6.** Procédé selon la revendication 5, **caractérisé en ce que** dans une première étape, un procédé d'évaluation (BV0) installé en amont par anticipation est utilisé, avec lequel procédé on détermine si un premier critère (K1) est satisfait, d'après lequel la distance relative actuelle (dx) du véhicule particulier (1) par rapport à l'objet situé devant (2) après le temps de réaction (t1) est plus petite qu'une distance minimale à respecter (dx_min), on identifiera en cas de satisfaction du premier critère (K1) à une situation de freinage d'urgence et on déterminera ultérieurement en cas de non satisfaction au premier critère (K1), lequel des autres procédés d'évaluation (BV1, BV2) est à utiliser.

**7.** Procédé selon la revendication 6, **caractérisé en ce qu'**en cas de non satisfaction au premier critère (K1), une évaluation est ultérieurement exécutée sur la base de la deuxième accélération (a2) de l'objet situé devant (2) et de la vitesse relative après le temps de réaction (dv_t1) de l'objet situé devant (2) par rapport au véhicule particulier (1), la vitesse relative après le temps de réaction (dv_t1) étant formée en tant que différence de la deuxième vitesse (v2) moins la vitesse propre (v1).

**8.** Procédé selon la revendication 6 ou 7, **caractérisé en ce qu'**en cas de non satisfaction au premier critère (K1), le procédé d'évaluation approprié (BV1, BV2) est déterminé en fonction d'autres critères (K2a, K2b, K2c, K2d), les autres critères (K2a, K2b, K2c, K2d) comprenant un ou plusieurs des critères suivants :

- un deuxième critère (K2a), qui est satisfait, si l'accélération (a2) de l'objet situé devant (2) est négative et la vitesse relative est négative après le temps de réaction (dv_t1),
en cas de satisfaction au deuxième critère (K2a) un critère d'admissibilité (zk1) étant vérifié pour le premier procédé d'évaluation (BV1) et en cas de satisfaction au critère d'admissibilité (zk1) le premier procédé d'évaluation (BV1) étant exécuté et en cas de non satisfaction au critère d'admissibilité (zk1) le deuxième procédé d'évaluation (BV2) étant utilisé,
- un troisième critère (K2b), qui est satisfait, si la deuxième accélération (a2) est négative et la vitesse relative après le temps de réaction (dv_t1) est supérieure ou égale à zéro,
en cas de satisfaction au troisième critère (K2b), le deuxième procédé d'évaluation (BV2) est utilisé,
- un quatrième critère (K2c), qui est satisfait, si la deuxième accélération (a2) est supérieure ou égale à zéro et la vitesse relative après le temps de réaction (dv_t1) est négative et en cas de satisfaction au quatrième critère (K2c), le premier procédé d'évaluation (BV1) est utilisé, et
- un cinquième critère (K2d), qui est satisfait, si la deuxième accélération (a2) est supérieure ou égale à zéro et la vitesse relative après le temps de réaction (dv_t1) est supérieure ou égale à zéro,

et en cas de satisfaction au cinquième critère (K2d) aucune détermination d'une situation de freinage d'urgence n'est exécutée.

**9.** Procédé selon l'une quelconque des revendications précédentes, **caractérisé en ce qu'**une accélération théorique (a1_d_1, a2_d_2) est respectivement déterminée avec les procédés d'évaluation (BV1, BV2) .

**10.** Procédé selon l'une quelconque des revendications précédentes, **caractérisé en ce que** dans le premier procédé d'évaluation (BV1) les équations de mouvement du véhicule particulier (1) et de l'objet situé devant (2) sont établies en deuxième ordre dans le temps et comportent :

une distance relative actuelle (dx), des valeurs d'accélération actuelles (a1, a2) du véhicule particulier (1) et de l'objet situé devant (2) et des vitesses actuelles (v1, v2) du véhicule particulier (1) et de l'objet situé devant (2), et on détermine s'il résulte des équations de mouvement un dépassement inférieur de la distance minimale (dx_min) entre le véhicule particulier (1) et l'objet situé devant (2).

**11.** Procédé selon la revendication 9 ou 10, **caractérisé en ce que** pour le premier procédé d'évaluation (BV1), on détermine une première accélération théorique a1_d_1 en utilisant l'équation

$$a1\_d\_1 = a2 - \frac{(dv\_t1)^2}{2 \cdot (dx\_t1 - dx\_min)} \qquad \text{(équation 7),}$$

dans laquelle a2 est la deuxième accélération, dv_t1 la vitesse relative prédéfinie après le temps de réaction (t1), dx_t1 la distance relative prédéfinie après le temps de réaction (t1) et dx_min la distance minimale.

**12.** Procédé selon l'une quelconque des revendications précédentes, **caractérisé en ce que** pour le deuxième procédé d'évaluation (BV2), on détermine une deuxième accélération théorique (a1_d_2) à partir d'un calcul, servant à déterminer quelle distance de freinage (s1_br) reste pour le véhicule particulier (1) en initiant un freinage après le temps de réaction (t1) sur la base des valeurs actuelles de la vitesse propre (v1), de la deuxième vitesse (v2) et de la deuxième accélération (a2), de la distance relative actuelle (dx) et de la distance minimale fixe (dx_min).

**13.** Procédé selon la revendication 12, **caractérisé en ce que** la deuxième accélération théorique (a1_d_2) est déterminée sur la base de l'équation

$$a1\_d\_2 = \frac{(v1\_t1)^2}{2 \cdot s1\_br}$$

$$(\text{équation } 14)$$

avec v1_t1 de la vitesse propre (v1) du véhicule particulier (1) déterminée à partir de la vitesse propre actuelle (v1) et de l'accélération propre actuelle (a1) après le temps de réaction (t1) et de la trajectoire de freinage disponible (s1_br) du véhicule particulier (1) en initiant le freinage après le temps de réaction (t1).

**14.** Dispositif de commande (6) pour un système de régulation de comportement dynamique de conduite (5) d'un véhicule particulier (1) pour exécuter un procédé selon l'une quelconque des revendications précédentes, le dispositif de commande (6) recevant pour déterminer des grandeurs d'état (v1, a1, dx, v2, a2) :

un signal de mesure de distance relative (M1) d'un capteur de distance (4) pour déterminer une distance relative (dx) par rapport à un objet (2) circulant devant,

un signal de mesure de vitesse (M2) d'un capteur de vitesse (7) pour déterminer une vitesse propre (v1) du véhicule particulier (1),

le dispositif de commande (6) déterminant ou mesurant en plus en tant que grandeurs d'état une accélération propre (a1) du véhicule particulier (1), une deuxième vitesse (v2) de l'objet situé devant (2) et une deuxième accélération (a2) de l'objet situé devant (2) et recevant des données mémorisées en interne ou en externe relatives à un temps de réaction (t1) et une distance minimale (dx_min) à respecter pour la distance relative,

le dispositif de commande (6) déterminant à partir des grandeurs d'état (v1, a1, dx, v2, a2) au moyen d'un procédé d'évaluation (BV1, BV2), s'il y a une situation de freinage d'urgence,

le dispositif de commande (6) utilisant, en fonction des grandeurs d'état (v1, a1, dx, v2, a2), différents procédés d'évaluation (BV1, BV2) pour évaluer s'il y a une situation de freinage d'urgence,

le dispositif de commande (6) déterminant en fonction des grandeurs d'état (v1, a1, dx, v2, a2) lequel des divers procédés d'évaluation (BV1, BV2) doit être utilisé,

les différents procédés d'évaluation (BV1, BV2) comprenant au moins les procédés d'évaluation suivants :

un procédé d'évaluation à équation de mouvement (BV1) pour déterminer un système d'équations de mouvement du véhicule particulier (1) et de l'objet situé devant (2), et

un procédé d'évaluation de distance de freinage (BV2) pour déterminer une distance de freinage disponible (s1_br) du véhicule particulier (1),

le dispositif de commande (6) émettant, en fonction de la détermination, des signaux de commande de freinage (M3) aux freins du véhicule (8) et/ou un signal d'avertissement (Si1) au conducteur.

**15.** Système de régulation du comportement dynamique de conduite (5) en particulier système de régulation de freinage ou système de conduite à colonnes, en particulier pour exécuter un procédé selon l'une quelconque des revendications 1 à 13,

le système de régulation du comportement dynamique de conduite (5) comportant un dispositif de commande (6) selon la revendication 14, le capteur de distance (4), le capteur de vitesse (7) et les freins de véhicule (8).

# Fig. 1

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1539523 B1
- DE 10258617 B4
- DE 102006019848 B4
- JP 2004038245 A
- EP 0891903 B1
- EP 1625979 B1
- EP 1803109 B1
- DE 102010051203 A1
- WO 2009072965 A1
- US 2008275618 A1
- US 2012016573 A1